# EUROPEAN PATENT APPLICATION

(11) **EP 4 344 166 A1**
(43) Date of publication of application: **27.03.2024**
(21) Application number: 23193358.1
(22) Date of filing: 25.08.2023
(51) Int. Cl.: H04L 67/12, G06Q 20/32, G06Q 20/42, G06Q 30/0601, H04L 67/55

(54) **PERSONAL SHOPPER INFORMATION PROCESSING METHOD, COMMUNICATION DEVICE FOR PERSONAL SHOPPING, AND INFORMATION PROCESSING DEVICE FOR PERSONAL SHOPPER SERVICES**

(30) Priority: 26.09.2022 JP 2022152761
(71) Applicant: Toshiba TEC Kabushiki Kaisha, Tokyo 141-8562 (JP)
(72) Inventor: Mori, Haruki, Tokyo, 141-8562 (JP)
(74) Representative: Bandpay & Greuter

(57) **Abstract**

According to an embodiment, a method for personal shopping services includes executing a shopping application on a communication terminal to generate transaction data for a sales transaction for a personal shopping service. The transaction data includes commodity information of at least one commodity. The method also includes acquiring prior confirmation request data for the personal shopping service from the transaction data, and then handing over the acquired prior confirmation request data to another application on the communication terminal and causing the other application to transmit the acquired prior request confirmation data to another communication terminal.

## Description

### FIELD

Embodiments described herein relate generally to an information processing method, a communication device, and an information processing device for personal shopper services and the like.

To this end, a method for personal shopping services, a non-transitory, computer-readable medium storing program instructions which when executed a processor of a communication device causes the device to perform said method, and a communication device for a personal shopping service according to appended claims are provided.

### BACKGROUND

In some cases, in response to a request by a client, a personal shopper (a picker) does the shopping at a store. In such cases, when the shopper has finished picking the merchandise at the store and begins settlement to pay the price for the selected merchandise, the client may want to check a list or the like regarding details of the picked-up merchandise.

In view of such circumstances, it would be desirable for a transaction processing service provided at the store to be able to notify a third party (e.g., the client) of the merchandise details and the like of the transaction to about be settled, that is before the settlement is completed.

### BRIEF DESCRIPTION OF THE DRAWINGS

FIG. 1 is a block diagram showing a schematic configuration of a transaction processing system according to an embodiment.
FIG. 2 is a block diagram of a transaction processing device.
FIG. 3 schematically shows the configuration of a data record included in a store database.
FIG. 4 schematically shows the configuration of transaction data.
FIG. 5 is a block diagram of an attendant terminal.
FIG. 6 is a block diagram of a user terminal.
FIG. 7 is a block diagram a cart terminal.
FIGs. 8 to 10 are flowcharts of user terminal processing. FIGs. 11 to 13 are flowcharts of smartphone POS processing. FIG. 14 shows a service unavailable screen.
FIG. 15 shows a registration screen.
FIG. 16 shows a merchandise scanning screen.
FIG. 17 shows a registration confirmation screen.
FIG. 18 shows a first selection screen.
FIG. 19 shows an execution confirmation screen.
FIG. 20 shows a permission code scanning screen.
FIGs. 21 to 23 are flowcharts of cart terminal processing. FIG. 24 is a flowchart of cart POS processing.
FIG. 25 shows a transfer screen.

### DETAILED DESCRIPTION

An embodiment described herein provides an information processing method, an information communication device, and an information processing device that enables a user of a transaction processing service provided at a store to easily notify a third party of the content of a transaction to be settled, before the settlement.

In general, according to one embodiment, a method for personal shopping services includes executing a shopping application on a communication terminal to generate transaction data for a sales transaction for a personal shopping service. The transaction data includes commodity information of at least one commodity. The method also includes acquiring prior confirmation request data for the personal shopping service from the transaction data, and then handing over the acquired prior confirmation request data to another application on the communication terminal and causing the other application to transmit the acquired prior request confirmation data to another communication terminal.

An example embodiment will now be described using the drawings.

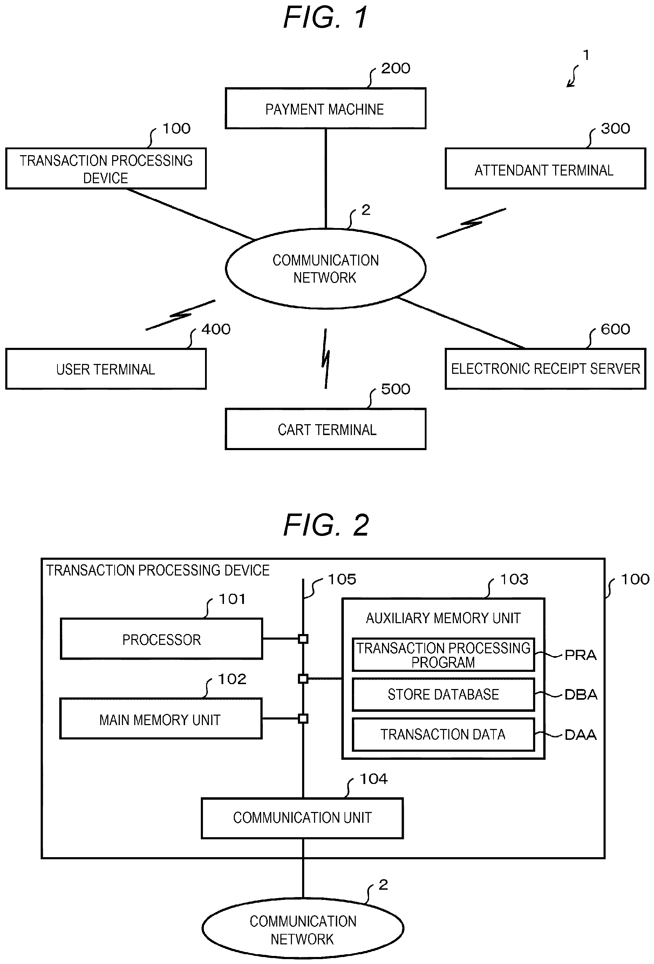

FIG. 1 is a block diagram showing a schematic configuration of a transaction processing system 1 according to this embodiment.

The transaction processing system 1 is formed of a transaction processing device 100, a payment machine 200, an attendant terminal 300, a user terminal 400, a cart terminal 500, and an electronic receipt server 600, which can communicate with each other via a communication network 2.

As the communication network 2, one of the internet, a VPN (virtual private network), a LAN (local area network), a public communication network, a mobile communication network and the like, or a suitable combination of these networks, can be used. In an example, a combination of the internet and a mobile communication network is used as the communication network 2.

As for the transaction processing device 100, the payment machine 200, the attendant terminal 300, the user terminal 400, and the cart terminal 500, any number of these devices may be included in the transaction processing system 1. In FIG. 1, only one of each such devices is specifically illustrated, but the depicted devices are represented of a plurality of such devices.

The transaction processing device 100 is an information processing device that performs information processing to provide a transaction processing service for processing a sales transaction of merchandise at a store, according to an operation carried out by a user at the store using the payment machine 200, the user terminal 400, and the cart terminal 500 as user interface terminals. The user is typically a customer purchasing merchandise at the store for himself or herself. The transaction processing device 100 is implemented, for example, as a cloud server, and provides a transaction processing service at a plurality of stores. The transaction processing device 100 may instead be implemented, for example, as a local server, and may provide the transaction processing service only at one store.

The payment machine 200 is installed at the store and executes payment processing for the transaction processed by the transaction processing device 100. The payment machine 200 accepts an operation from the operator in the payment processing. That is, the payment machine 200 is a terminal device that accepts an operation from the user for payments to settle the sales transaction. The operator of the payment machine 200 is usually the customer/user, but in some cases, a salesclerk may be the operator of the payment machine 200.

The attendant terminal 300 is an information processing terminal operated by a salesclerk. The attendant terminal 300 is a terminal device for a user interface for information processing to support the monitoring work of the salesclerk with respect to the transactions being processed by the transaction processing system 1.

The user terminal 400 is an information communication device held by the user (e.g., a handheld device or the like). The user terminal 400 is typically owned by the user and brought into the store and used there by the user. The user terminal 400 is a user interface terminal that accepts an operation from the user for the transaction processing at the transaction processing device 100.

The cart terminal 500 is an information processing terminal attached to a shopping cart provided at the store. The cart terminal 500 is lent to the user along with the shopping cart. The cart terminal 500 is a terminal device that accepts an operation from the user for the transaction processing at the transaction processing device 100. In some examples, cart terminal 500 may be an information communication terminal that is lent to the user by the store and carried and used by the user.

The electronic receipt server 600 is an information processing device that performs information processing to provide an electronic receipt service. The electronic receipt server 600 is implemented, for example, as a cloud server, and provides the electronic receipt service enabling transactions at a plurality of stores to be electronically viewed by a user of the electronic receipt service. In some examples, electronic receipt server 600 may be implemented as a local server, and may provide the electronic receipt service enabling a transaction only at one store to be electronically viewed.

FIG. 2 is a block diagram of the transaction processing device 100.

The transaction processing device 100 includes a processor 101, a main memory unit 102, an auxiliary memory unit 103, a communication unit 104, and a transmission line 105 or the like. The processor 101, and the main memory unit 102, the auxiliary memory unit 103, and the communication unit 104, can communicate with each other via the transmission line 105.

The processor 101, the main memory unit 102, and the auxiliary memory unit 103 thus connected together via the transmission line 105 form a computer that performs information processing to control the transaction processing device 100.

The processor 101 executes information processing to control each part in order to implement various functions of the transaction processing device 100, according to an information processing program such as an operating system and an application program.

The main memory unit 102 includes a read-only memory area and a rewritable memory area. The main memory unit 102 stores a part of the information processing program in the read-only memory area. The main memory unit 102 may store necessary data for the processor 101 to execute the processing to control each part, in the read-only memory area or the rewritable memory area. In the main memory unit 102, the rewritable memory area is used as a work area for the processor 101.

As the auxiliary memory unit 103, for example, an EEPROM (electrically erasable programmable read-only memory), an HDD (hard disk drive), an SSD (solid-state drive), or other various known memory devices can be used. The auxiliary memory unit 103 stores data used by the processor 101 to perform various kinds of processing and data generated through the processing by the processor 101. The auxiliary memory unit 103 may store the foregoing information processing program. In this embodiment, the auxiliary memory unit 103 stores a transaction processing program PRA, which is one information processing program. The transaction processing program PRA is an application program describing procedures for transaction processing. A part of the memory area of the auxiliary memory unit 103 is used as an area for storing a store database DBA and transaction data DAA. The store database DBA is a database for managing the store providing the transaction processing service by the transaction processing device 100. The transaction data DAA is data representing the content of one transaction.

The communication unit 104 executes communication processing for performing data communication via the communication network 2. As the communication unit 104, for example, an existing wired communication device for the internet can be used. As the communication unit 104, a wireless communication device connected via wireless communication to the communication network 2 may be used instead of or in addition to the wired communication device.

The transmission line 105 includes an address bus, a data bus, and a control signal line or the like, and transmits data and a control signal communicated between the connected units.

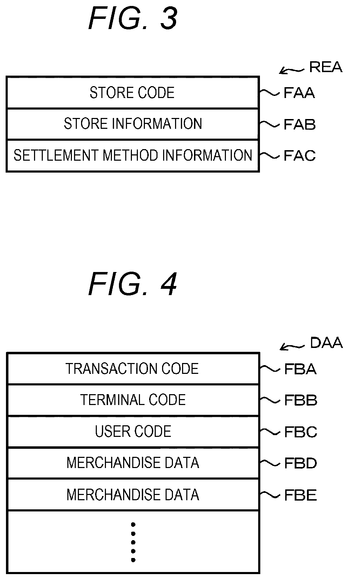

FIG. 3 schematically shows the configuration of one data record REA included in the store database DBA.

The store database DBA is an aggregate of data records REA correlated with each of stores providing the transaction processing service by the transaction processing device 100.

The data record REA includes fields FAA, FAB, FAC. In the field FAA, a store code as an identifier for identifying the correlated store is set. In the field FAB, various store information that is necessary for providing the transaction processing service at the correlated store is set. The store information includes, for example, information representing a time bracket during which the use of the transaction processing service is permitted at the store (hereinafter referred to as service hours). In the field FAC, settlement method information representing a settlement method permitted to be used when making settlement using an online settlement service to pay the price for the transaction processed by the transaction processing service at the correlated store is set.

FIG. 4 schematically shows the configuration of the transaction data DAA.

The transaction data DAA is generated for each of transactions currently being processed by the transaction processing device 100 and is stored in the auxiliary memory unit 103. Therefore, in some cases, no transaction data DAA is stored in the auxiliary memory unit 103, whereas in some cases, a plurality of transaction data DAA are simultaneously stored in the auxiliary memory unit 103.

The transaction data DAA includes fields FBA, FBB, FBC. The transaction data DAA can include any number of fields following a field FBD. In the field FBA, a transaction code as an identifier of the transaction concerned is set. In the field FBB, a terminal code as an identifier of the user terminal 400 or the cart terminal 500 used by the user making the transaction concerned is set. In the field FBC, a user code as an identifier of the user making the transaction concerned is set. If there is an item of merchandise that is already registered (hereinafter referred to as traded merchandise), fields FBD, FBE and the like respectively correlated with the items of traded merchandise are added to the transaction data DAA. In the fields FBD, FBE and the like, merchandise data about each item of traded merchandise is separately set. In this context, merchandise data includes a merchandise code as an identifier of the traded merchandise concerned, and a quantity (number of items of the same merchandise code or the like). The merchandise data may include various other information such as a merchandise name, a unit price, and discount information.

As the hardware of the transaction processing device 100, a general-purpose server device can be used. Generally, the transaction processing device 100 is provided with the transaction processing program PRA already stored in the auxiliary memory unit 103 but the store database DBA and the transaction data DAA are not yet stored therein. However, hardware without the transaction processing program PRA already stored in the auxiliary memory unit 103 may be provided and the transaction processing program PRA may be subsequently or separately provided. For example, an application program of a similar type to transaction processing program PRA may be provided already stored in the transaction processing device 100 and the transaction processing program PRA may be written into the auxiliary memory unit 103 or an existing version of similar software may be updated to transaction processing program PRA. In general, transaction processing program PRA may be provided in any format or form. For example, such a program may be recorded in a removable recording medium such as a magnetic disk, a magneto-optical disk, an optical disk or a semiconductor memory, or downloaded or provided by communication via a network.

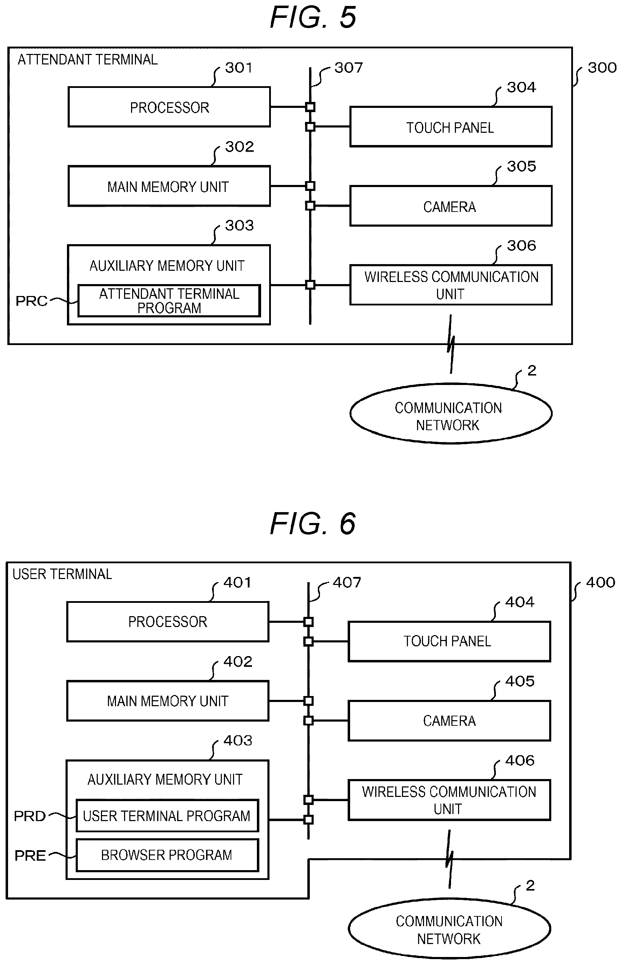

FIG. 5 is a block diagram of the attendant terminal 300.

The attendant terminal 300 includes a processor 301, a main memory unit 302, an auxiliary memory unit 303, a touch panel 304, a camera 305, a wireless communication unit 306, and a transmission line 307 or the like.

The outlines of the functions of the processor 301, the main memory unit 302, the auxiliary memory unit 303, and the transmission line 307 are equivalent to those of the processor 101, the main memory unit 102, the auxiliary memory unit 103, and the transmission line 105 and therefore will not be described further in detail. However, the auxiliary memory unit 303 stores an attendant terminal program PRC instead of the transaction processing program PRA. The attendant terminal program PRC is an application program describing procedures of information processing by the processor 301 for causing the attendant terminal 300 to operate as a user interface for the salesclerk supporting the transactions processed by the transaction processing device 100.

The touch panel 304 displays a screen for presenting information to the operator. The touch panel 304 also inputs an instruction via a touch operation on the screen by the operator.

The camera 305 includes an optical system and an image sensor and generates, by the image sensor, image data representing an image in a field of view formed by the optical system.

The wireless communication unit 306 executes communication processing for performing data communication via the communication network 2. As the wireless communication unit 306, for example, an existing wireless communication device for a wireless LAN can be used. A communication unit wired to the communication network 2 may be used instead of or in addition to the wireless communication unit 306.

As the hardware of the attendant terminal 300, for example, a tablet-type information processing device, or a portable information processing device such as a smartphone can be used. A desktop computer device may be used as the hardware of the attendant terminal 300.

FIG. 6 is a block diagram of the user terminal 400.

The user terminal 400 includes a processor 401, a main memory unit 402, an auxiliary memory unit 403, a touch panel 404, a camera 405, a wireless communication unit 406, and a transmission line 407 or the like.

The outlines of the functions of the processor 401, the main memory unit 402, the auxiliary memory unit 403, and the transmission line 407 are equivalent to those of the processor 101, the main memory unit 102, the auxiliary memory unit 103, and the transmission line 105. Also, the outlines of the functions of the touch panel 404, the camera 405, and the wireless communication unit 406 are equivalent to those of the touch panel 304, the camera 305, and the wireless communication unit 306. However, the auxiliary memory unit 403 stores a user terminal program PRD instead of the transaction processing program PRA. The user terminal program PRD is an application program describing procedures of information processing by the processor 401 for causing the user terminal 400 to operate as a user interface for the transaction processing by the transaction processing device 100. The auxiliary memory unit 403 also stores a browser program PRE. The browser program PRE is an application program describing procedures of information processing for web browsing via the communication network 2. As the browser program PRE, for example, a general-purpose browser application provided as standard equipment in a smartphone or the like can be used as it is. The wireless communication unit 406 typically includes a known communication device for performing data communication via a mobile communication network. However, the wireless communication unit 406 may include an existing wireless communication device for a wireless LAN instead of or in addition to the above communication device.

As the basic hardware of the user terminal 400, for example, the hardware of a smartphone may be used.

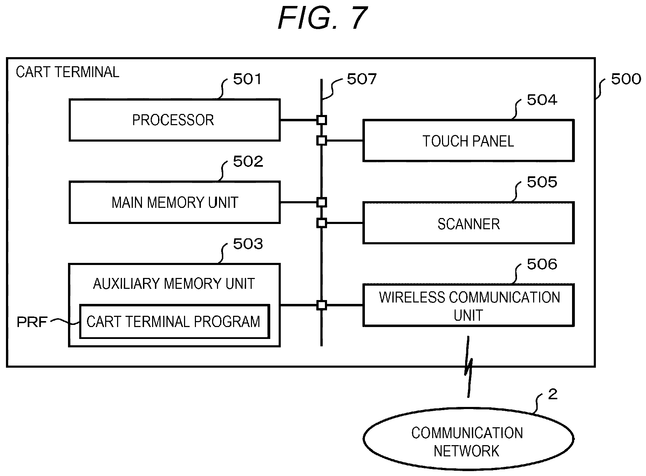

FIG. 7 is a block diagram of the cart terminal 500.

The cart terminal 500 includes a processor 501, a main memory unit 502, an auxiliary memory unit 503, a touch panel 504, a scanner 505, a wireless communication unit 506, and a transmission line 507 or the like.

The outlines of the functions of the processor 501, the main memory unit 502, the auxiliary memory unit 503, and the transmission line 507 are equivalent to those of the processor 101, the main memory unit 102, the auxiliary memory unit 103, and the transmission line 105. Also, the outlines of the functions of the touch panel 504 and the wireless communication unit 506 are equivalent to those of the touch panel 304 and the wireless communication unit 306. However, the auxiliary memory unit 503 stores a cart terminal program PRF instead of the transaction processing program PRA. The cart terminal program PRF is an application program describing procedures of information processing by the processor 501 for causing the cart terminal 500 to operate as a user interface for the transaction processing by the transaction processing device 100. The wireless communication unit 506 typically includes an existing wireless communication device for a wireless LAN. However, the wireless communication unit 506 may include a known communication device for performing data communication via a mobile communication network instead of or in addition to the above communication device.

The scanner 505 optically scans a one-dimensional barcode and a two-dimensional barcode or the like.

As the basic hardware of the cart terminal 500, for example, the hardware of a tablet-type information processing device may be used. As the scanner 505, a separate unit from the information processing device may be externally attached to the information processing device. However, the cart terminal 500 may be configured, using a built-in camera in the information processing device as the image pickup device of the scanner 505.

The operation of the transaction processing system 1 configured as described above will now be described. The contents of various processes described below are an example. Change in the order of a part of the processes, omission of a part of the processes, or addition of another process or the like can be made where appropriate. In the description below, the description of certain processes (or parts thereof) may be omitted in order to facilitate the understanding of characteristic operations in this embodiment. For example, while processing to cope with certain errors may be performed as necessary if the error has occurred, the description of such specific processing may be omitted, but such processing may be implemented in an embodiment as appropriate.

A service provided to the user by the transaction processing system 1 as described below is referred to as a smartphone POS service when the user uses the user terminal 400 and as a cart POS service when the user uses the cart terminal 500.

In order to use the smartphone POS service, the user installs the user terminal program PRD in an information processing device such as the smartphone owned by the user and thus enables the information processing device to be used as the user terminal 400. The user then carries the user terminal 400 with the processor 401 executing user terminal processing according to the user terminal program PRD, and enters a store that is a target of the provision of the smartphone POS service.

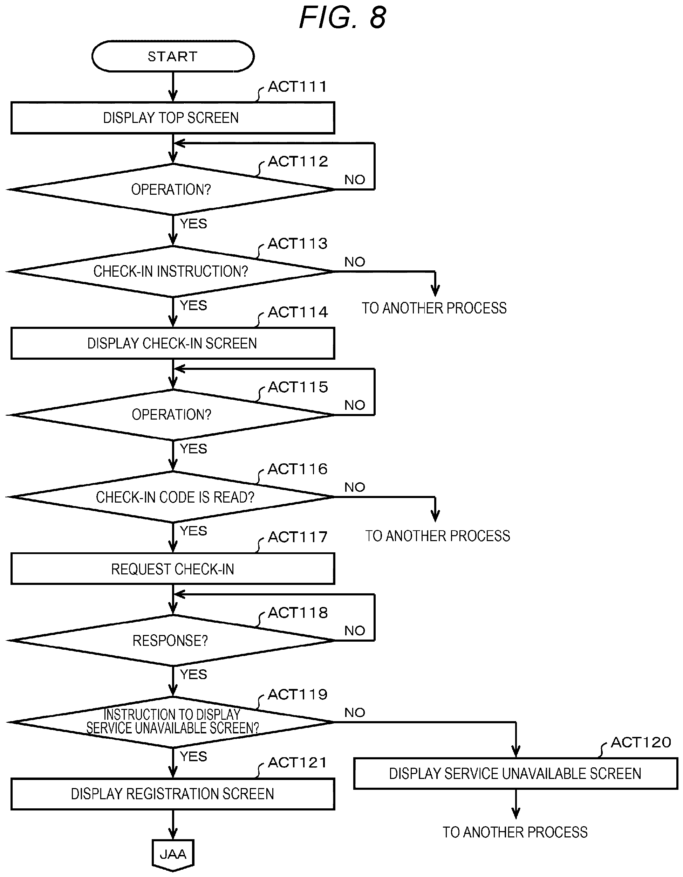

FIGS. 8, 9, and 10 are flowcharts of the user terminal processing.

In ACT 111, the processor 401 causes the touch panel 404 to display a top screen. The top screen is a screen for the user to designate a function to be executed, from among various functions implemented by the user terminal processing. Top screen shows a soft key for accepting a check-in instruction.

A check-in code representing check-in data is put up at the entrance of a store that is a target of the provision of the smartphone POS service, or inside the store or the like. The check-in code is, for example, a two-dimensional barcode. The check-in data includes at least a store code. Therefore, the check-in code varies on a per store basis.

In order to start the use of the smartphone POS service at the store, the user performs a predetermined operation such as tapping on the soft key shown in the top screen for accepting a check-in instruction.

In ACT 112, the processor 401 waits for a certain operation to be performed by the user while the top screen is displayed. If, for example, the touch panel 404 detects a certain operation by the user, the processor 401 gives YES as the result of determination and proceeds to ACT 113.

In ACT 113, the processor 401 checks whether the performed operation is an operation for a check-in instruction or not. If not, the processor 401 gives NO as the result of determination, checks the content of the operation, and proceeds to another process to perform the corresponding processing. As another process, for example, the processor 401 confirms that an operation of giving an instruction to cancel is performed, then cancels check-in procedures, and performs processing again from ACT 111. As another process, a different process or a plurality of processes may be selectively performed. However, such processes are not described in detail here.

If an operation for a check-in instruction is performed as described above, the processor 401 gives YES as the result of determination in ACT 113 and proceeds to ACT 114.

In ACT 114, the processor 401 causes the touch panel 404 to display a check-in screen. The check-in screen is a screen for guiding the user in such a way that the camera 405 of the user terminal 400 picks up an image of the check-in code.

In ACT 115, the processor 401 waits for a certain operation to be performed by the user. If it is confirmed that a certain operation by the user is performed, the processor 401 gives YES as the result of determination and proceeds to ACT 116.

The user operates the user terminal 400 according to the check-in screen and causes the camera 405 of the user terminal 400 to pick up an image of the check-in code put up at the store used.

If the camera 405 picks up an image of a two-dimensional barcode, again, the processor 401 assumes that an operation for reading a two-dimensional barcode is performed, thus gives YES as the result of determination in ACT 115, and proceeds to ACT 116.

In ACT 116, the processor 401 checks whether the check-in code is read by the performed operation or not. If not, the processor 401 gives NO as the result of determination, checks the content of the operation, and proceeds to another process to perform the corresponding processing. As another process, for example, the processor 401 confirms that an operation for reading a two-dimensional barcode is performed but that the two-dimensional barcode concerned is not the check-in code, and displays a screen for notifying the user of such an operation error. As another process, a different process or a plurality of processes may be selectively performed. However, such processes are not described in detail here.

If an image of the check-in code is picked up by the camera 405, the processor 401 assumes that the check-in code is read by the performed operation, thus gives YES as the result of determination in ACT 116, and proceeds to ACT 117.

In ACT 117, the processor 401 requests a check-in to the transaction processing device 100. The processor 401 sends out, for example, request data for requesting a check-in addressed to the transaction processing device 100, to the communication network 2 from the wireless communication unit 406. The processor 401 includes, in the request data, check-in data represented by the check-in code picked up by the camera 405 and the terminal code of the user terminal 400. The terminal code is stored, for example, in the auxiliary memory unit 403. As the terminal code, for example, an identifier decided by the operating system of the user terminal 400 in the installation of the user terminal program PRD can be used. This identifier is, for example, a 32-digit code of alphanumeric mix.

In order to use the electronic receipt service provided by the electronic receipt server 600, the user carries out a user registration and has a user code issued in advance. If the user wants to use an online settlement service for the settlement for the transaction using the smartphone POS service, the user links the user code of the electronic receipt service as a use setting of the user terminal program PRD in advance. This link causes the user code to be stored in the main memory unit 402 or the auxiliary memory unit 403 in the user terminal 400 in the state where the processor 401 is accessible in the user terminal processing. If the user code is stored as described above, the processor 401 also includes this user code in the request data.

When the request data for requesting a check-in is transmitted to the transaction processing device 100 via the communication network 2, the communication unit 104 of the transaction processing device 100 receives this request data and temporarily saves the request data in the main memory unit 102 or the auxiliary memory unit 103.

As the request data sent out from the user terminal 400 is thus received by the transaction processing device 100, the processor 101 starts transaction processing for the smartphone POS service (hereinafter referred to as smartphone POS processing) according to the transaction processing program PRA.

However, such check-in procedures are simply an example and can be changed in various ways. For example, the processor 401 of the user terminal 400 may transmit check-in data including position information acquired using the GPS (global positioning system) or another position measurement sensor or the like to the transaction processing device 100 after starting the user terminal program PRD. On receiving the position information, for example, the transaction processing device 100 may acquire the store information of the store where the user terminal 400 having transmitted the position information is located, from the database showing the store information correlated with the position information, and may perform check-in processing according to this store information.

If the processor 101 has already executed smartphone POS processing for a transaction with a different user, the processor 101 starts new smartphone POS processing as a different thread of processing from the former smartphone POS processing. That is, the processor 101 may execute a plurality of sessions of smartphone POS processing in parallel. In this case, a plurality of user terminals 400 used as user interface terminals by the transaction processing device 100 exist simultaneously. However, the description below focuses on only the processing of a transaction with one user, as the processing of interest. Thus, the "user terminal 400" in the description below refers to one user terminal 400 used by the user for the smartphone POS processing of interest. The "transaction" in the description below refers to the transaction that is the target of the processing of interest.

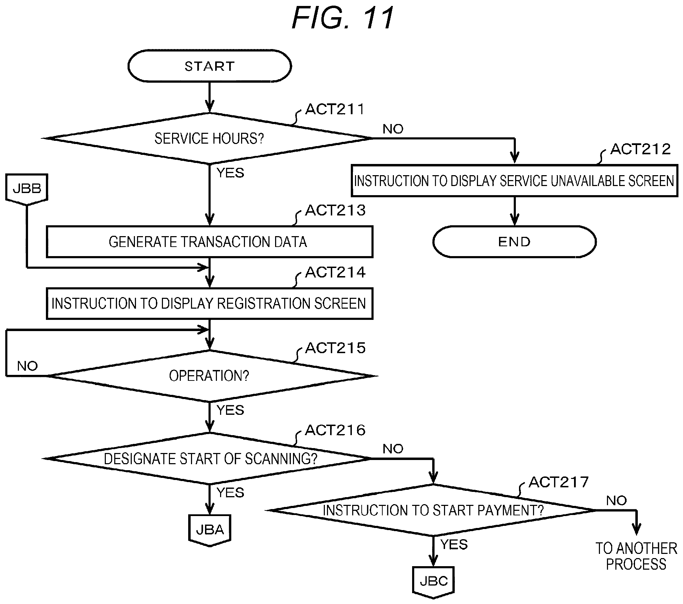

FIGS. 11, 12, and 13 are flowcharts of the smartphone POS processing. In the description below, an example where the user terminal 400 reads a check-in code and where the check-in data represented by the check-in code includes a store code, is described.

In ACT 211 in FIG. 11, the processor 101 checks whether the current time is within service hours or not. That is, for example, the processor 101 searches the store database DBA for a data record REA where the store code included in the received check-in data is set in the field FAA, and determines the service hours represented by the information included in the store information set in the field FAB in this data record REA. If the current time is not included in the service hours determined at this point, for example, the processor 101 gives NO as the result of determination and proceeds to ACT 212. The service hours may be defined suitably on a per store basis.

In ACT 212, the processor 101 instructs the user terminal 400 to display a service unavailable screen as a response to the check-in request. The service unavailable screen is a screen for causing the user to recognize that the smartphone POS service is unavailable. The processor 101 sends out, for example, instruction data for instructing the user terminal 400 to display the service unavailable screen, addressed to the user terminal 400, to the communication network 2 from the communication unit 104. The processor 101 subsequently ends the smartphone POS processing.

The instruction to display the screen is transmitted to the user terminal 400 via the communication network 2, and the wireless communication unit 406 of the user terminal 400 receives this instruction data. On receiving the instruction, the wireless communication unit 406 notifies the processor 401 of the reception of the instruction. When the instruction to display the screen is received, the processor 401 causes the touch panel 404 to display a screen corresponding to the instruction

The instruction to display the screen may include screen data representing a screen to be displayed according to this instruction or may not include such screen data but rather data for making the screen to be displayed identifiable at the user terminal 400 according to the instruction. In the former case, the processor 101 generates, for example, screen data representing the screen to be displayed at the user terminal 400 and then includes this screen data in the instruction. In the latter case, the processor 101 includes, in the instruction, a screen identifier or the like that is predetermined for indicating the screen to be displayed at the user terminal 400 or a notification identifier identifying a notification that triggers the display of the screen. The notification identifier is, for example, information predetermined to identify a notification such as "it is outside service hours".

After requesting a check-in in ACT 117 in FIG. 8, the processor 401 of the user terminal 400 proceeds to ACT 118.

In ACT 118, the processor 401 waits for a response to the check-in request. If the wireless communication unit 406 receives instruction data giving an instruction to display a certain screen, the processor 401 assumes that a response is received, thus gives YES as the result of determination, and proceeds to ACT 119.

In ACT 119, the processor 401 checks whether an instruction to display the service unavailable screen is given or not. If an instruction to display the service unavailable screen is given as described above, the processor 401 gives YES as the result of determination and proceeds to ACT 120.

In ACT 120, the processor 401 causes the touch panel 404 to display the service unavailable screen.

If the received instruction data includes screen data, the processor 401 causes the touch panel 404 to directly display the screen represented by the screen data. If the received instruction data includes a screen identifier, the processor 401 generates the screen identified by the screen identifier and causes the touch panel 404 to display the screen. If the received instruction data includes a notification identifier, the processor 401 determines a screen to be displayed according to the notification identified by the notification identifier, generates this screen, and causes the touch panel 404 to display the screen.

The transmission and reception of instructions to display various screens described below are performed according to procedures similar to the above, though the content of the screen to be displayed varies.

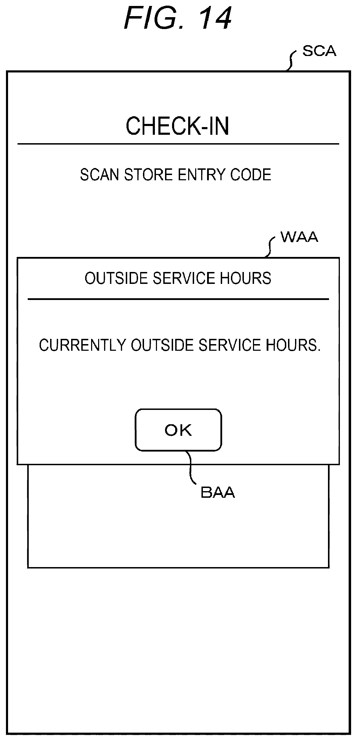

FIG. 14 shows a service unavailable screen SCA.

The service unavailable screen SCA is a screen showing a pop-up window WAA superimposed on a screen displayed on the touch panel 404 in the state where the check-in code is scanned. The pop-up window WAA shows a text message for informing the user that it is out of service hours, and a button BAA. The button BAA is a soft key for accepting a statement by the user that the user has confirmed the information on the service unavailable screen SCA.

After confirming the information on the service unavailable screen SCA, the user taps on the button BAA. If such an operation is detected on the touch panel 404, the processor 401 ends the display of the service unavailable screen SCA and returns the display screen on the touch panel 404, for example, to the screen for scanning the check-in code.

If the current time is within in the service hours, the processor 101 gives YES as the result of determination in ACT 211 in FIG. 11 and proceeds to ACT 213.

In ACT 213, the processor 101 generates new transaction data. That is, for example, the processor 101 decides a new transaction code that is different from a transaction code for identifying another transaction, according to a predetermined rule, then generates new transaction data DAA in which this transaction code is set in the field FBA and in which a terminal code received along with the check-in data is set in the field FBB, and stores the transaction data DAA in the auxiliary memory unit 103. If a user code is received along with the check-in data, the processor 101 sets this user code in the field FBC of the newly generated transaction data DAA. If a user code is not received along with the check-in data, the processor 101 leaves the field FBC of the newly generated transaction data DAA, for example, in a null state.

In ACT 214 in FIG. 11, the processor 101 instructs the user terminal 400 to display a registration screen as a response to the check-in request. The registration screen is a screen including a list of merchandise already registered as traded merchandise, or the like, and configured to cause the user to recognize the registration status of the traded merchandise. The processor 101 generates, for example, screen data representing the registration screen reflecting the registration status of the traded merchandise and includes this screen data in instruction data for instructing the user terminal 400 to display the screen. The processor 101 may not include the screen data in this instruction data and may include a screen identifier of the registration screen or a notification identifier identifying a notification that "confirmation of check-in is complete", as described above. The registration screen may be generated by the processor 401 of the user terminal 400.

If the processor 401 gives YES as the result of determination in ACT 118 in FIG. 8 in response to the reception of the instruction to display the registration screen and then proceeds to ACT 119, the processor 401 gives NO as the result of determination because the instruction is not the instruction to display the service unavailable screen, and the processor 401 then proceeds to ACT 121.

In ACT 121, the processor 401 causes the touch panel 404 to display the registration screen.

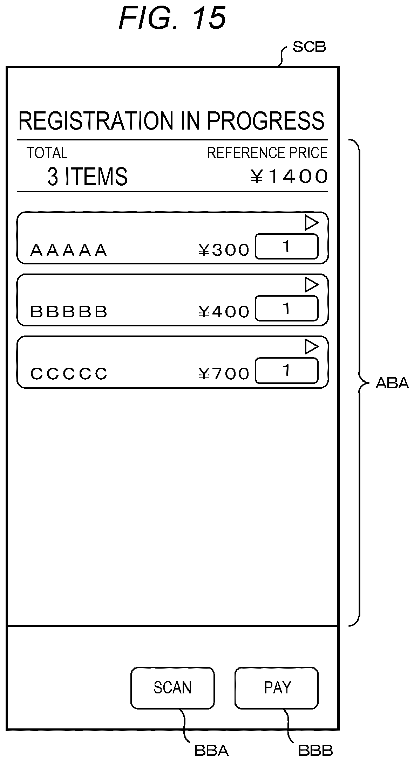

FIG. 15 shows a registration screen SCB.

In the registration screen SCB, an image showing the registration status is arranged in a display area ABA. The registration screen SCB shows buttons BBA, BBB. In the example shown in FIG. 15, the image arranged in the display area ABA shows a state where items with merchandise names "AAAAA", "BBBBB", and "CCCCC" and unit prices of 300 yen, 400 yen, and 700 yen, respectively, are already registered and the total of 3 items, and where the reference price is 1400 yen. The reference price is an amount found by subtracting an amount of price reduction based on various services such as a coupon service from the total of the unit prices of all the registered merchandise. If the user settles the transaction without changing the traded merchandise and the service applied, this reference price is the amount of settlement. The image arranged in the display area ABA successively changes according to the registration status of the traded merchandise. When the processor 101 executes ACT 214 in FIG. 11 for the first time, no traded merchandise is registered yet. Therefore, in the registration screen SCB represented by the screen data sent to the user terminal 400 as the processor 101 executes ACT 213 in FIG. 11 for the first time, the image arranged in the display area ABA is an image showing no information about each merchandise and showing the total of 0 and the reference price of 0 yen.

The button BBA is a soft key for accepting an instruction to shift to a state where a new item of merchandise is scanned. The button BBB is a soft key for accepting a designation of the start of payment. In the registration screen SCB and various screens described below, a principal display object is illustrated and the illustration of a part of display objects may be omitted. For example, an image for causing the user to visualize an operation to be performed by the user may be included in the screen. Also, the registration screen SCB and the various screens described below are an example and may be suitably defined, for example, by the creator of the transaction processing program PRA, or the like.

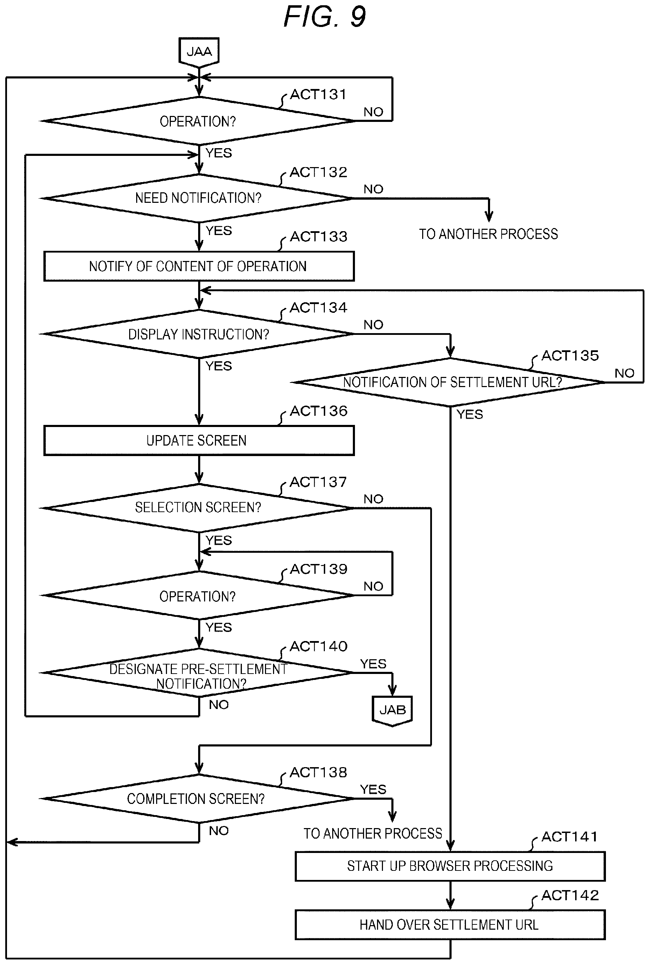

After causing the touch panel 404 to display the registration screen SCB, the processor 401 proceeds to ACT 131 in FIG. 9.

In ACT 131, the processor 401 waits for a certain operation to be performed by the user. If the touch panel 404 detects a certain operation by the user, the processor 401 gives YES as the result of determination and proceeds to ACT 132.

In ACT 132, the processor 401 checks whether the transaction processing device 100 needs to be notified of the performed operation or not. If the performed operation is not an operation predetermined as a target of notification, the processor 401 gives NO as the result of determination, checks the content of the operation, and proceeds to another process to perform the corresponding processing. As another process, for example, the processor 401 scrolls the registration screen in response to a scroll operation. As another process, a different process or a plurality of processes may be selectively performed. However, such processes are not described in detail here.

If the performed operation is an operation predetermined as a target of notification, the processor 401 gives YES as the result of determination in ACT 132 and proceeds to ACT 133.

In ACT 133, the processor 401 notifies the transaction processing device 100 of the content of the operation. For example, the processor 401 sends out notification data for notifying of the content of the operation addressed to the transaction processing device 100, to the communication network 2 from the wireless communication unit 406.

When the notification data for notifying of the content of the operation is transmitted to the transaction processing device 100 via the communication network 2, the communication unit 104 of the transaction processing device 100 receives this notification data. On receiving the notification data, the communication unit 104 notifies the processor 101 of the reception of the notification data.

The transmission and reception of the notification of the content of the operation about the various screens described below are performed according to procedures similar to the above, though the content of the operation varies.

In ACT 215 in FIG. 11, the processor 101 waits for an operation to be performed at the user terminal 400. If notified by the communication unit 104 of the reception of the notification data for notifying of the content of the operation as described above, the processor 101 gives YES as the result of determination and proceeds to ACT 216.

In ACT 216, the processor 101 checks whether the performed operation is an operation of designating the start of scanning or not. If not, the processor 101 gives NO as the result of determination and process to ACT 217.

In ACT 217, the processor 101 checks whether the performed operation is an operation of designating the start of payment or not. If not, the processor 101 gives NO as the result of determination, checks the content of the operation, and proceeds to another process to perform the corresponding processing. As another process, for example, the processor 101 confirms that an operation of designating the cancellation of the transaction is performed, and executes processing to cancel the transaction and subsequently ends the registration processing. As another process, a different process or a plurality of processes may be selectively performed. However, such processes are not described in detail here.

The user searches for an item of merchandise to be a target of a transaction at the store. To newly register an item of merchandise, the user performs a predetermined operation for designating the start of scanning such as tapping on the button BBA on the registration screen SCB. This operation is a target of notification. Therefore, the processor 401 of the user terminal 400 gives YES as the result of determination in both ACT 131 and ACT 132 in FIG. 9, proceeds to ACT 133, and transmits the notification data for notifying of the giving of an instruction to start scanning.

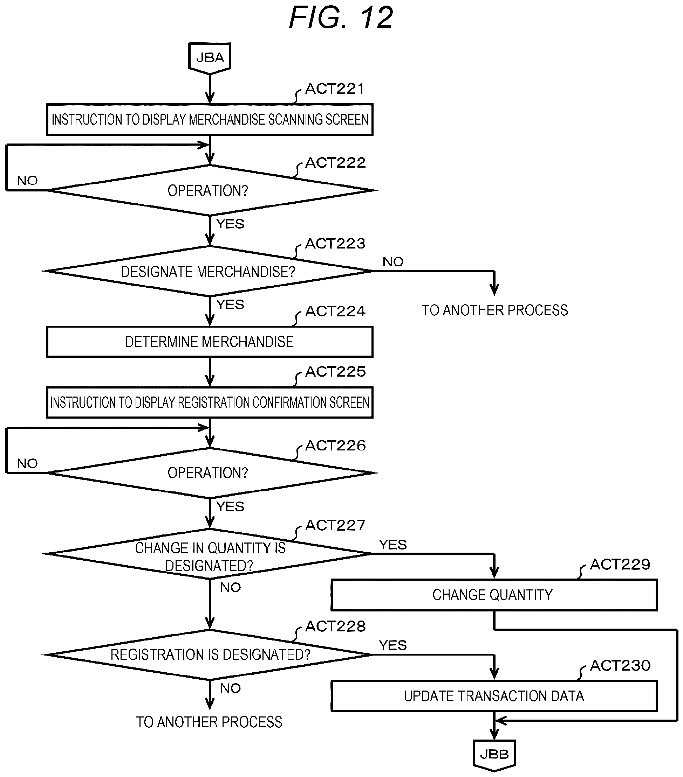

After the user terminal 400 thus notifies the transaction processing device 100 of the start scanning instruction, the processor 101 gives YES as the result of determination in ACT 216 in FIG. 11 and proceeds to ACT 221 in FIG. 12.

In ACT 221, the processor 101 instructs the user terminal 400 to display a merchandise scanning screen. The merchandise scanning screen is a screen for scanning a barcode representing a merchandise code.

After notifying of the content of the operation in ACT 133 in FIG. 9, the processor 401 proceeds to ACT 134.

In ACT 134, the processor 401 checks whether a display instruction is given or not. If not, the processor 401 gives NO as the result of determination and proceeds to ACT 135.

In ACT 135, the processor 401 checks whether a notification of a settlement URL is given or not. If not, the processor 401 gives NO as the result of determination and returns to ACT 134.

Thus, the processor 401 waits for a display instruction and a notification of a settlement URL in ACT 134 and ACT 135.

If instruction data giving an instruction to display a certain screen is transmitted from the transaction processing device 100 and is received by the wireless communication unit 406, the processor 401 gives YES as the result of determination in ACT 134 and proceeds to ACT 136.

In ACT 136, the processor 401 updates the display screen on the touch panel 404 in response to the instruction. That is, the processor 401 updates the display screen on the touch panel 404 into the merchandise scanning screen in response to the instruction to display the merchandise scanning screen.

In ACT 137, the processor 401 checks whether the updated display screen is one of a first selection screen or a second selection screen. If not the first selection screen or the second selection screen, as in the case where the screen is updated to the merchandise scanning screen, the processor 401 proceeds to ACT 138.

In ACT 138, the processor 401 checks whether the updated display screen is a completion screen. If the screen is updated to a screen that is not the completion screen, as in the case where the screen is updated to the merchandise scanning screen, the processor 401 returns to the waiting state of ACT 131. That is, if the updated display screen is a screen that is different from the first selection screen, the second selection screen, or the completion screen, the processor 401 shifts to waiting for an operation on the updated screen.

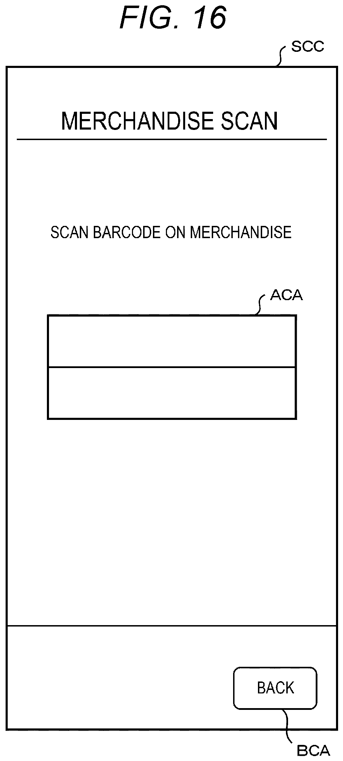

FIG. 16 shows a merchandise scanning screen SCC.

The merchandise scanning screen SCC includes a display area ACA and a button BCA. The display area ACA is an area for displaying an image acquired by the camera 405. The button BCA is a soft key for the user to declare the cancellation of the scanning of the merchandise code.

To display the merchandise scanning screen SCC, the processor 401 of the user terminal 400 activates the camera 405 and displays an image thus acquired by the camera 405 as superimposed in the display area ACA. If a predetermined operation to designate the start of scanning is performed, the processor 401 may generate a merchandise scanning screen and cause the touch panel 404 to display the merchandise scanning screen without notifying the transaction processing device 100. In this case, the processor 101 performs processing corresponding to ACT 223 in ACT 216. If the result of determination is YES in ACT 216, the processor 101 proceeds to ACT 224 without performing ACT 221 to ACT 223.

When the merchandise scanning screen SCC is displayed on the touch panel 404, the user operates the user terminal 400 in such a way that a barcode shown on the merchandise to be registered appears in the display area ACA. The processor 401 analyzes the image acquired by the camera 405 and attempts to read the barcode. If the barcode is successfully read, this operation is a target of notification and therefore the processor 401 gives YES as the result of determination in both ACT 131 and ACT 132 in FIG. 9, proceeds to ACT 133, and notifies the transaction processing device 100 that a scanning operation is performed (merchandise scan notification), along with a notification of data represented by the read barcode (hereinafter referred to as barcode data).

If, for example, the user wants to temporarily stop the registration of the traded merchandise and check the registration status of the traded merchandise, the user performs a predetermined operation to designate the cancellation of the scanning such as tapping on the button BCA. This operation is a target of notification. Therefore, the processor 401 gives YES as the result of determination in both ACT 131 and ACT 132 in FIG. 9, proceeds to ACT 133, and notifies the transaction processing device 100 that an operation designating the cancellation of the scanning is performed.

After finishing the instruction to display the merchandise scanning screen in ACT 221 in FIG. 12, the processor 101 of the transaction processing device 100 proceeds to ACT 222.

In ACT 222, the processor 101 waits for an operation to be performed at the user terminal 400. If notified of the content of the operation from the user terminal 400, the processor 101 gives YES as the result of determination and proceeds to ACT 223.

In ACT 223, the processor 101 checks whether the performed operation is an operation for designating an item of merchandise or not. If not, the processor 101 gives NO as the result of determination, checks the content of the operation, and proceeds to another process to perform the corresponding processing. As another process, the processor 101 may confirm that an operation of designating the cancellation of the scanning such as tapping on the button BCA was performed, then returns to ACT 214 in FIG. 11, and returns the display screen on the touch panel 404 to the registration screen SCB. As another process, a different process or a plurality of processes may be selectively performed. However, such processes are not described in detail here.

The operation of designating the cancellation of the scanning need not be treated as a target of notification from the user terminal 400, and the processor 401 may autonomously execute the processing of returning the display screen on the touch panel 404 of the user terminal 400 to the registration screen SCB as described above, after giving NO as the result of determination in ACT 132.

If the processor 101 is notified of barcode data and this barcode data represents a merchandise code, the processor 101 assumes that an operation for designating an item of merchandise has been performed, and therefore gives YES as the result of determination in ACT 223 and proceeds to ACT 224.

In ACT 224, the processor 101 identifies the item of merchandise based on the barcode data which the processor 101 was notified of. That is, for example, the processor 101 extracts a merchandise code included in the barcode data and identifies the merchandise by the merchandise code as an item of merchandise to be in the transaction (hereinafter referred to as candidate merchandise). The processor 101 may receive, for example, a notification from the user terminal 400 that a tapping operation on a preset button displayed on the touch panel 404 is performed, and may identify the merchandise allocated to this preset button as a candidate merchandise. The processor 101 may also receive, for example, a notification from the user terminal 400 of a merchandise code directly inputted as a numeric string by the user via the touch panel 404, and may identify the merchandise by the user-entered merchandise code as a candidate merchandise.

In ACT 225, the processor 101 instructs the user terminal 400 to display a registration confirmation screen. The registration confirmation screen is a screen for checking whether to register the candidate merchandise in the transaction or not (that is, confirm the candidate merchandise is traded merchandise). The processor 101 may include screen data representing the registration confirmation screen in instruction data for the instruction to display the registration confirmation screen. Alternatively, the processor 401 of the user terminal 400 may generate the registration confirmation screen including the data of the candidate merchandise.

On receiving the instruction to display the registration confirmation screen, the processor 401 of the user terminal 400 gives YES as the result of determination in ACT 134 in FIG. 9, proceeds to ACT 136, and updates the display screen on the touch panel 404 into the registration confirmation screen. Since the updated screen in this case is not the first selection screen, the second selection screen, or the completion screen, the processor 401 gives NO as the result of determination in both ACT 137 and ACT 138 and returns to the waiting state of ACT 131.

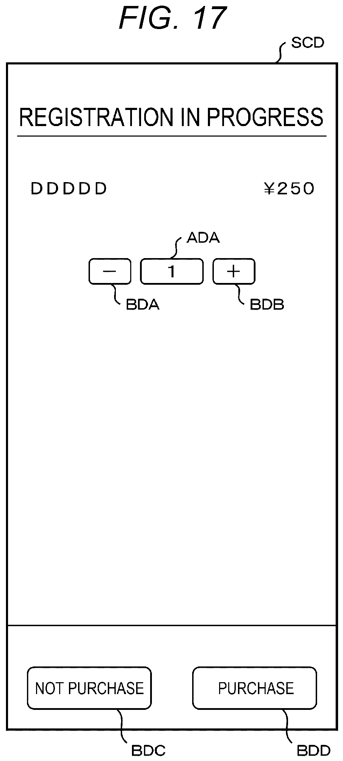

FIG. 17 shows a registration confirmation screen SCD.

The registration confirmation screen SCD is an example where the candidate merchandise is merchandise with a merchandise name "DDDDD" and a unit price of 250 yen. The registration confirmation screen SCD shows a display area ADA and buttons BDA, BDB, BDC, BDD. The display area ADA shows a quantity therein. The button BDA is a soft key for accepting a designation of reduction in quantity. The button BDB is a soft key for accepting a designation of increase in quantity. The button BDC is a soft key for accepting a designation not to register the merchandise. The button BDD is a soft key for accepting a designation to register the merchandise.

In ACT 226 in FIG. 12, the processor 101 waits for an operation to be performed at the user terminal 400. If notified of the content of the operation from the user terminal 400, the processor 101 gives YES as the result of determination and proceeds to ACT 227.

In ACT 227, the processor 101 checks whether a change in quantity is designated or not. If not, the processor 101 gives NO as the result of determination and proceeds to ACT 228.

In ACT 228, the processor 101 checks whether the registration of the candidate merchandise as traded merchandise was designated or not. If not, the processor 101 gives NO as the result of determination, checks the content of the operation, and proceeds to another process to perform the corresponding processing. As another process, for example, the processor 101 confirms that a predetermined operation to designate the cancellation of the registration such as tapping on the button BDC is performed, and returns to ACT 221. As another process, a different process or a plurality of processes may be selectively performed. However, such processes are not described in detail here.

If the user wants to change the quantity, the user designates a change in quantity by a predetermined operation such as tapping on the button BDA or the button BDB. This operation is a target of notification. Therefore, the processor 401 of the user terminal 400 gives YES as the result of determination in both ACT 131 and ACT 132 in FIG. 9, proceeds to ACT 133, and notifies the transaction processing device 100 that an operation of designating a change in quantity is performed. In response to this notification, the processor 101 of the transaction processing device 100 gives YES as the result of determination in ACT 227 in FIG. 12 and proceeds to ACT 229.

In ACT 229, the processor 101 updates the transaction data DAA to change the quantity in response to the designation. After that, the processor 101 returns to ACT 214 in FIG. 11, instructs the user terminal 400 to display the registration screen SCB corresponding to the updated transaction data as described above, and subsequently returns to the waiting state of ACT 215.

If the user decides to register the candidate merchandise shown in the registration confirmation screen SCD in the quantity shown in the display area ADA, the user designates the registration, for example, by a predetermined operation such as tapping on the button BDD. When notified of such an operation from the user terminal 400, the processor 101 gives YES as the result of determination in ACT 228 and proceeds to ACT 230.

In ACT 230, the processor 101 registers the candidate merchandise in the quantity shown in the display area ADA. The processor 101 updates the transaction data DAA, for example, in such a way as to include merchandise data representing the merchandise code of the candidate merchandise and the quantity shown in the display area ADA. After that, the processor 101 returns to ACT 214 in FIG. 11, instructs the user terminal 400 to display the registration screen SCB corresponding to the updated transaction data as described above, and subsequently returns to the waiting state of ACT 215.

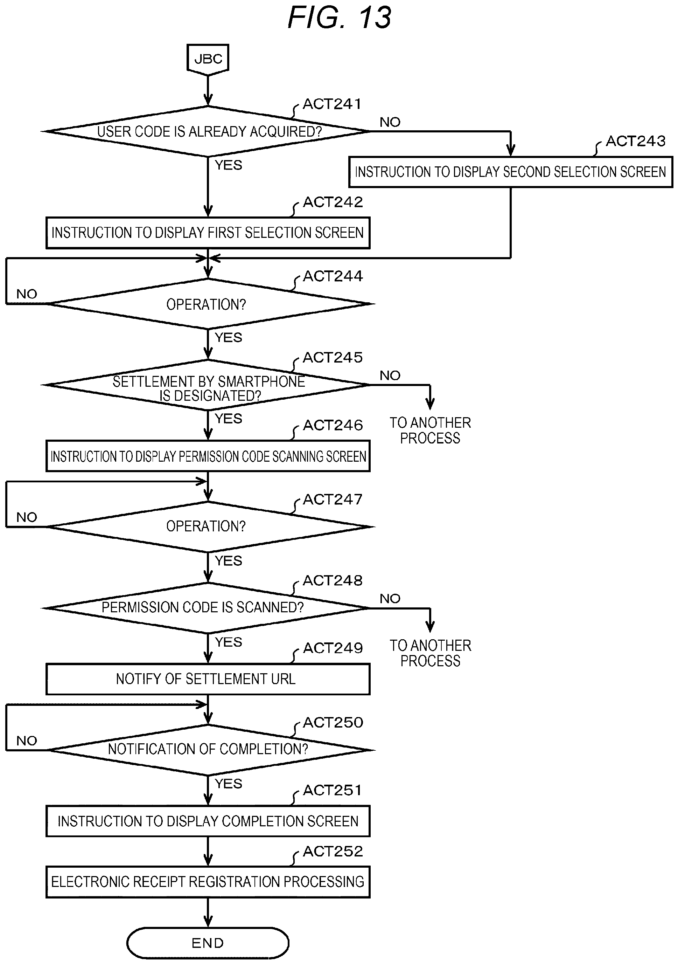

On finishing the registration of all the traded items of merchandise in this transaction, the user designates the start of payment, for example, by a predetermined operation such as tapping on the button BBB in the registration screen SCB. This operation is a target of notification. Therefore, the processor 401 gives YES as the result of determination in both ACT 131 and ACT 132 in FIG. 9, proceeds to ACT 133, and notifies the transaction processing device 100 that an operation of designating the start of payment was performed. In response to this notification, the processor 101 of the transaction processing device 100 gives YES as the result of determination in ACT 217 in FIG. 11 and proceeds to ACT 241 in FIG. 13.

In ACT 241, the processor 101 checks whether a user code was already acquired or not. If, for example, it is confirmed that a user code is set in the field FBC of the transaction data DAA, the processor 101 assumes that a user code was already acquired, and therefore gives YES as the result of determination and proceeds to ACT 242.

In ACT 242, the processor 101 instructs the user terminal 400 to display the first selection screen. The first selection screen is a screen for causing the user to select settlement by smartphone or settlement by payment machine. If a notification identifier is included in the instruction to display the first selection screen, this notification identifier can be, for example, a notification of settlement by smartphone or settlement by payment machine or a notification that a user code is already acquired.

On receiving the instruction to display the first selection screen, the processor 401 of the user terminal 400 gives YES as the result of determination in ACT 134 in FIG. 9, proceeds to ACT 136, and updates the display screen on the touch panel 404 into the first selection screen.

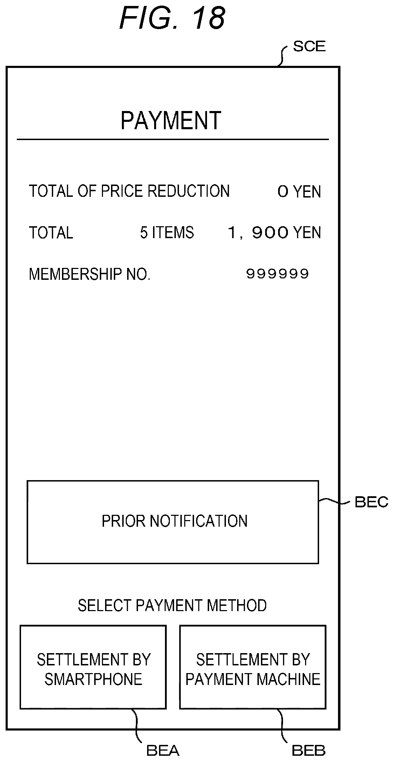

FIG. 18 shows a first selection screen SCE.

The first selection screen SCE shows the total amount of price reduction applied, the total number of items of traded merchandise, the amount of settlement, and the user code in the form of character strings, and buttons BEA, BEB, BEC. The button BEA is a soft key for accepting a designation of settlement by smartphone. The button BEB is a soft key for accepting a designation of settlement by payment machine. The button BEC is a soft key for accepting a designation that the user (shopper) intends to notify a third party (client) of the details of the transaction before the settlement. Such notification can be referred to as a pre-settlement notification. The pre-settlement notification is performed to allow a third party (e.g., the personal shopping service client) to check the content of the transaction prior to the completion. Therefore, in the example shown in FIG. 18, a character string "prior notification" is shown on the button BEC.

If it is confirmed that the field FBC of the transaction data DAA is in the null state, the processor 101 assumes that a user code is not acquired yet, and therefore gives NO as the result of determination in ACT 241 in FIG. 13 and proceeds to ACT 243.

In ACT 243, the processor 101 instructs the user terminal 400 to display the second selection screen. The second selection screen is a screen permitting the user to designate settlement by payment machine. The second selection screen is, for example, a screen formed by changing the first selection screen SCE to invalidate the button BEA, such as not showing the button BEA or graying out the button BEA. If a notification identifier is included in instruction data for the instruction to display the second selection screen, this notification identifier is assumed to be, for example, a notification that an instruction to execute settlement by payment machine is requested or a notification that a user code is not acquired yet.

If an operation of designating the start of payment is performed, the processor 401 of the user terminal 400 may execute the processing of ACT 241 to ACT 243, in place of the processor 101. In this case, for example, if the processor 101 of the transaction processing device 100 gives YES in ACT 217 in FIG. 11, the processor 101 proceeds to ACT 244 in FIG. 13.

On receiving the instruction to display the second selection screen, the processor 401 of the user terminal 400 gives YES as the result of determination in ACT 134 in FIG. 9, proceeds to ACT 136, and updates the display screen on the touch panel 404 into the second selection screen.

After changing the display screen on the touch panel 404 into the first selection screen or the second selection screen in ACT 136 as described above, the processor 401 gives YES as the result of determination in ACT 137 and proceeds to ACT 139.

In ACT 139, the processor 401 waits for a certain operation to be performed by the user. If, for example, the touch panel 404 detects a certain operation by the user, the processor 401 gives YES as the result of determination and proceeds to ACT 140.

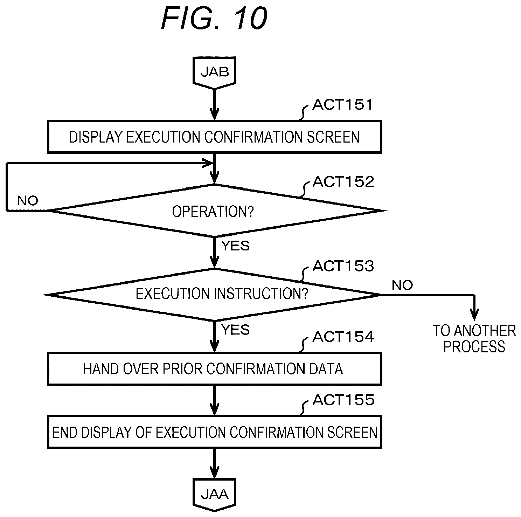

In ACT 140, the processor 401 checks whether the performed operation is an operation for designating a pre-settlement notification or not. If it is confirmed, for example, that the performed operation is a predetermined operation for designating a pre-settlement notification such as tapping on the button BEC, the processor 401 gives YES as the result of determination and proceeds to ACT 151 in FIG. 10.

In ACT 151, the processor 401 causes the touch panel 404 to display an execution confirmation screen.

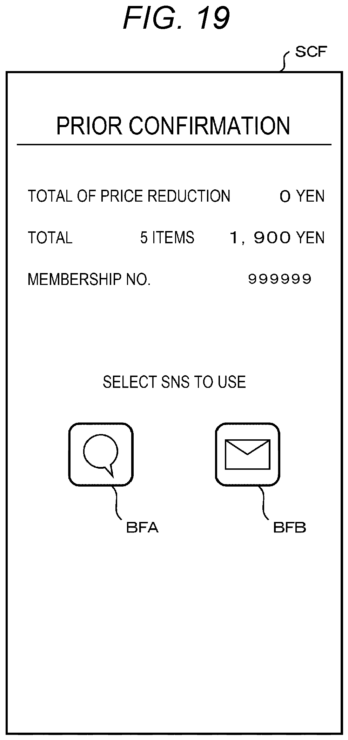

FIG. 19 shows an execution confirmation screen SCF.

The execution confirmation screen SCF is a screen for allowing the user to select an application to be used for a pre-settlement notification and designate the execution of the pre-settlement notification using the selected application. The execution confirmation screen SCF shows the total amount of price reduction, the total number of items of traded merchandise, the amount of settlement, and the user code as text or the like to allow the user (shopper) to confirm the transaction for which the pre-settlement notification is to be sent. The execution confirmation screen SCF shows buttons BFA, BFB. Each of the buttons BFA, BFB is a soft key for accepting a designation of a separate application.

The processor 401 checks which application is available at the user terminal 400, of predetermined applications available for the pre-settlement notification, and shows buttons correlated with the applications concerned, on the execution confirmation screen SCF. The predetermined application available for the pre-settlement notification is, for example, an application having a function of transmitting any data to any transmission destination, such as a mailer application that can transmit emails or a SNS (social networking service) application. That is, the execution confirmation screen SCF shown in FIG. 19 is an example where two applications are available for the pre-settlement notification. Therefore, the execution confirmation screen displayed at another user terminal 400 may show different applications correlated with the buttons BFA, BFB. Alternatively, the execution confirmation screen displayed at another user terminal 400 may show one button or three or more buttons instead of the buttons BFA, BFB.

In ACT 152, the processor 401 waits for a certain operation to be performed by the user. If, for example, the touch panel 404 detects a certain operation by the user, the processor 401 gives YES as the result of determination and proceeds to ACT 153.

In ACT 153, the processor 401 checks whether the performed operation is an operation for designating the execution of the pre-settlement notification or not. If not, the processor 401 gives NO as the result of determination, checks the content of the operation, and proceeds to another process to perform the corresponding processing. As another process, for example, the processor 401 confirms that an operation designating the cancellation of the pre-settlement notification was performed, returns the display screen on the touch panel 404 to the screen displayed before the execution confirmation screen was displayed, that is, the first selection screen or the second selection screen, and subsequently returns to the waiting state of ACT 139 in FIG. 9. As another process, a different process or a plurality of other processes may be performed. However, such other processes are not described in detail here.

To execute the pre-settlement notification, the user performs a predetermined operation for designating the execution. At this point, for example, if a plurality of applications are shown as options as in the execution confirmation screen SCF shown in FIG. 19, the user performs an operation of designating the execution of the pre-settlement notification with the application to be used. For example, if the user decides to perform the pre-settlement notification with the application correlated with the button BFA, the user taps on the button BFA.

If it is confirmed that the predetermined operation for designating the execution of the pre-settlement notification is thus performed, the processor 401 gives YES as the result of determination in ACT 153 and proceeds to ACT 154.

In ACT 154, the processor 401 hands over prior confirmation data (prior confirmation request data) to the designated application.

The processor 401 executes information processing based on the user terminal program PRD, and functions as a selection unit that selects information processing relating to a plurality of applications in response to an instruction from the user, and functions as a hand-over unit that hands over prior confirmation data to this selected information processing.

The prior confirmation data includes data to be presented to a third party (e.g., personal shopper service client) from the data included in the transaction data. The data to be included in the prior confirmation data may be set suitably according to preference, for example, by the creator of the user terminal program PRD or the owner of the user terminal 400 or the like. In this context, the prior confirmation data is assumed to include a list of traded merchandise, the total amount of price reduction, the total number of items of traded merchandise, the amount of settlement, the user code or the like. The data format of the prior confirmation data may be decided suitably by the creator of the user terminal program PRD or the owner of the user terminal 400 or the like. The data format of the prior confirmation data is assumed to be, for example, text data.

The processor 401 extracts the data to be included in the prior confirmation data from data sent from the transaction processing device 100 every time transaction data is updated. The processor 401 requests and acquires the data to be included in the prior confirmation data from the transaction processing device 100 every time ACT 154 is executed, for example. Alternatively, the processor 401 extracts data shown on the latest registration screen as the data to be included in the prior confirmation data. The processor 401 thus executes the user terminal program PRD and functions as an acquisition unit.

If the application designated to be used for the pre-settlement notification is not started up yet, the processor 401 starts processing of the application selected and hands over the prior confirmation data to the selected application. To hand over the prior confirmation data, a known function provided by the OS (operating system) of the user terminal 400 to transfer data between applications can be used.

After that, the user operates the selected application and causes the prior confirmation data to be transmitted to a desired notification destination.

In ACT 155, the processor 401 returns the display screen on the touch panel 404 to the screen displayed before the execution confirmation screen was displayed, that is, the first selection screen or the second selection screen. After that, the processor 401 returns to the waiting state of ACT 131 in FIG. 9.

If the user operates the user terminal 400 to make settlement using the online settlement service, the user performs, for example, a predetermined operation for designating settlement by smartphone, such as tapping on the button BEA shown in the first selection screen SCE. If the user makes settlement using the payment machine 200, the user performs, for example, a predetermined operation for designating settlement by payment machine, such as tapping on the button BEB shown in the first selection screen SCE or the second selection screen. These operations are targets of notification. Therefore, the processor 401 gives YES in ACT 139, NO in ACT 140, and YES in ACT 132 in FIG. 9 as the result of determination, proceeds to ACT 133, and notifies the transaction processing device 100 that the operation of designating settlement by smartphone or settlement by payment machine is performed.

On finishing the display instruction in ACT 242 or ACT 243 in FIG. 13, the processor 101 proceeds to ACT 244 in both cases.

In ACT 244, the processor 101 waits for an operation to be performed at the user terminal 400. If the user terminal 400 notifies the transaction processing device 100 of an operation as described above, the processor 101 gives YES as the result of determination and proceeds to ACT 245.

In ACT 245, the processor 101 checks whether settlement by smartphone is designated or not. If not, the processor 101 gives NO as the result of determination, checks the content of the operation, and proceeds to another process to perform the corresponding processing. As another process in this context, the processor 101 confirms that settlement by payment machine was designated, and executes processing for causing the payment machine 200 to perform the settlement processing for the transaction. As another process, a different process or a plurality of processes may be selectively performed. However, such processes are not described in detail here.

In an example, the processing for causing the payment machine 200 to perform settlement processing is performed as follows.

The processor 101 instructs the user terminal 400 to display a payment screen. The payment screen is a screen for transferring payment processing for the transaction to the payment machine 200. The payment screen shows a barcode representing information for the payment machine 200 to make an inquiry about the transaction to be settled to the transaction processing device 100.

On receiving the instruction to display the payment screen, the processor 401 gives YES as the result of determination in ACT 134 in FIG. 9, proceeds to ACT 136, and updates the display screen on the touch panel 404 into the payment screen. Since the updated screen at this point is not the first selection screen, the second election screen, or the completion screen, the processor 401 gives NO as the result of determination in both ACT 137 and ACT 138 and returns to the waiting state of ACT 131.

If a plurality of payment machines 200 are installed in the store, the user may select any payment machine 200 that is not in use from among these payment machines 200, and causes a barcode scanner provided in that payment machine 200 to read the barcode shown on the payment screen. In response to this, the selected payment machine 200 requests the transaction processing device 100 to provide payment data based on the information represented by the barcode read by the barcode scanner.

On receiving the request for payment data, the processor 101 transmits the requested payment data for causing the payment machine 200 to settle the transaction to the payment machine 200.

The payment machine 200 suitably displays a screen in response to the payment data thus transmitted from the transaction processing device 100, and also accepts an operation from the user about the payment and executes processing for the payment for the transaction based on the payment data. This processing by the payment machine 200 may be similar to, for example, processing performed by a payment machine in an existing POS system.

If the processor 101 of the transaction processing device 100 proceeds from ACT 244 to ACT 245 in FIG. 13 in response to the operation of designating settlement by smartphone at the user terminal 400 when the first selection screen SCE is displayed, the processor 101 gives YES as the result of determination in ACT 245 and proceeds to ACT 246. If the processor 101 gives an instruction to display the second selection screen in ACT 243 because the user code is not acquired, settlement by smartphone is not designated and the processor 101 does not proceed to ACT 246.

In ACT 246, the processor 101 instructs the user terminal 400 to display a permission code scanning screen. The permission code scanning screen is a screen for scanning a barcode representing a permission code. If a notification identifier is included in instruction data for the instruction to display the permission code scanning screen, this notification identifier is assumed to identify, for example, a notification that an input of a permission code is requested.

On receiving the instruction to display the permission code scanning screen, the processor 401 gives YES as the result of determination in ACT 134 in FIG. 9, proceeds to ACT 136, and updates the display screen on the touch panel 404 into the permission code scanning screen. Since the updated screen at this point is not the first selection screen, the second election screen, or the completion screen, the processor 401 gives NO as the result of determination in both ACT 137 and ACT 138 and returns to the waiting state of ACT 131.

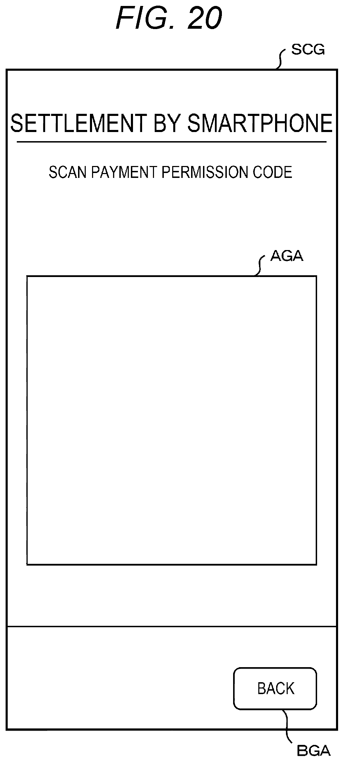

FIG. 20 shows a permission code scanning screen SCG.

The permission code scanning screen SCG includes a display area AGA and a button BGA. The display area AGA is an area for displaying an image acquired by the camera 405. The button BGA is a soft key for the user to declare the cancellation of settlement by smartphone.

To display the permission code scanning screen SCG, the processor 401 of the user terminal 400 activates the camera 405 and displays an image thus acquired by the camera 405, as superimposed in the display area AGA.

In a payment area predetermined as a partial area in the store, a two-dimensional barcode representing a permission code for permitting predetermined settlement by smartphone is put up. To put up the two-dimensional barcode, a signboard may be installed or a printed object may be placed, or the like. The payment area is an area where settlement using an online settlement service is permitted. The payment area may be suitably defined by the operator of the store on a per store basis. The permission code may vary on a per store basis or may be common to a plurality of stores. A one-dimensional barcode representing the permission code may be put up, instead of the foregoing two-dimensional barcode.

The user moves to the payment area and then operates the user terminal 400 in such a way that the two-dimensional barcode put up as described above appears in the display area AGA. The processor 401 analyzes the image acquired by the camera 405 and attempts to read the two-dimensional barcode. If the two-dimensional barcode is successfully read, this operation is a target of notification and therefore the processor 401 gives YES as the result of determination in both ACT 131 and ACT 132 in FIG. 9, proceeds to ACT 133, and notifies the transaction processing device 100 that a scanning operation is performed, along with a notification of barcode data represented by the read two-dimensional barcode. Thus, the signboard or the printed object or the like to put up the two-dimensional barcode is equivalent to a medium serving as the source of acquisition of the permission code by the user terminal 400.

On finishing the display instruction in ACT 246 in FIG. 13, the processor 101 proceeds to ACT 247.

In ACT 247, the processor 101 waits for an operation to be performed at the user terminal 400. If notified of the content of the operation from the user terminal 400, the processor 101 gives YES as the result of determination and proceeds to ACT 248.

In ACT 248, the processor 101 checks whether the permission code is scanned or not. If not, the processor 101 gives NO as the result of determination, checks the content of the operation, and proceeds to another process to perform the corresponding processing. As another process, for example, the processor 101 confirms that an operation of designating the cancellation of settlement by smartphone such as tapping on the button BGA is performed, then returns to ACT 242, and returns the display screen on the touch panel 404 of the user terminal 400 to the first selection screen SCE. Also, as another process, the for example, the processor 101 confirms that an operation of scanning a barcode that does not represent the permission code is performed, then shows an error indication, subsequently returns to ACT 246, and returns the display screen on the touch panel 404 of the user terminal 400 to the permission code scanning screen SCG. The error indication is, for example, a screen display for notifying the operator that settlement by smartphone cannot be performed unless the permission code is scanned. As another process, a different process or a plurality of processes may be selectively performed. However, such processes are not described in detail here.

If notified of an operation along with a notification of barcode data representing the permission code, the processor 101 gives YES as the result of determination in ACT 248 and proceeds to ACT 249.

In ACT 249, the processor 101 accesses the online settlement service via a web and notifies the user terminal 400 of a settlement URL (uniform resource locator) for settling the transaction. The processor 101 includes, in the settlement URL, for example, an address for accessing a web server providing the online settlement service (hereinafter referred to as settlement server), and settlement data about the transaction. The processor 101 can determine, for example, the amount of settlement and the transaction code for the transaction, from the settlement data. The processor 101 can determine, for example, the identifier of a member store of the online settlement service to which the store where the transaction is carried out belongs to, from the settlement data. The processor 101 can determine, for example, the identifier for identifying the transaction processing device 100 at the settlement server, from the settlement data. What information can be determined by the processor 101 from the settlement data is in conformity with the specifications of the online settlement service. A part of the information included in the settlement data may be sent to the settlement server from the user terminal 400 or the transaction processing device 100 via a separate communication, without being included in the settlement data.

On receiving the notification of the settlement URL, the processor 401 of the user terminal 400 gives YES as the result of determination in ACT 135 in FIG. 9 and proceeds to ACT 141.

In ACT 141, the processor 401 starts up browser processing according to the browser program PRE provided in the user terminal 400. If the browser processing is already started up, the processor 401 skips this process.

In ACT 142, the processor 401 hands over the settlement URL which the processor 401 is notified of from the transaction processing device 100, to the browser processing thus started up.

In the browser processing, the processor 401 accesses the settlement server, based on the settlement URL handed over from the user terminal processing. After that, in the browser processing, the processor 401 makes settlement using the online settlement service in response to an instruction from the settlement server and an operation by the user. The procedures of the settlement using the online settlement service may be, for example, known procedures in an existing online settlement service. Such procedures are not described in detail here.

On completion of the settlement, the settlement server notifies, for example, the transaction processing device 100 identified by the identifier determined from the settlement data included in the settlement URL used for the access, of the completion of the settlement along with a notification of a transaction identifier determined from the same settlement URL.

After giving the notification of the settlement URL in ACT 249 in FIG. 13, the processor 101 of the transaction processing device 100 proceeds to ACT 250.

In ACT 250, the processor 101 waits for a notification of completion. If notified of the completion of the settlement from the settlement server as described above, the processor 101 gives YES as the result of determination and proceeds to ACT 251.

In ACT 251, the processor 101 instructs the user terminal 400 to display a completion screen. The completion screen is a screen permitting the user to recognize that the transaction is complete. If a notification identifier is included in instruction data for the instruction to display the completion screen, this notification identifier is assumed to identify, for example, a notification that the settlement is complete.

On receiving the instruction to display the completion screen, the processor 401 gives YES as the result of determination in ACT 134 in FIG. 9, proceeds to ACT 136, and updates the display screen on the touch panel 404 into the completion screen. Since the updated screen at this point is the completion screen, the processor 401 gives YES as the result of determination in ACT 138 and proceeds to another process. As another process, for example, the processor 401 returns to ACT 111 in FIG. 8 in response to an operation such as tapping on a soft key shown in the completion screen. As another process, a different process or a plurality of processes may be selectively performed. However, such processes are not described in detail here.

The processor 401 executes the user terminal program PRD, as described above, and functions as an execution unit for causing the user terminal 400 to operate as a user interface terminal.

In ACT 252 in FIG. 13, the processor 101 performs electronic receipt registration processing. That is, the processor 101 sends various data such as the user code, the list of traded merchandise, and the result of settlement to the electronic receipt server 600 in order to enable the content of the transaction of this time to be viewed via the electronic receipt service.

Then, the electronic receipt server 600 saves the acquired data in a transaction database and enables the content of the transaction to be viewed via the electronic receipt service. This electronic receipt registration processing may be similar to, for example, processing performed in an existing electronic receipt service. Such processing is not described in detail here. Therefore, the data sent from the processor 101 to the electronic receipt server 600 is in conformity with the specifications of the electronic receipt service.

After that, the processor 101 ends the smartphone POS processing.

When the cart terminal 500 is in an activated state, the processor 501 is executing cart terminal processing according to the cart terminal program PRF.

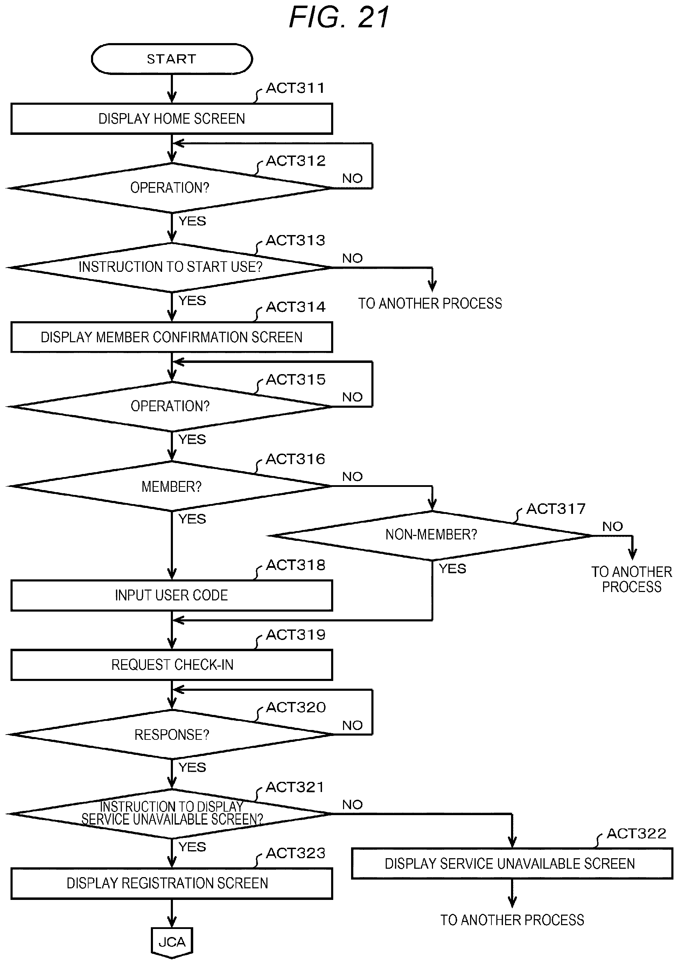

FIGS. 21, 22, and 23 are flowcharts of the cart terminal processing.

In ACT 311 in FIG. 21, the processor 501 causes the touch panel 504 to display a home screen. The home screen is a screen permitting the operator to designate a function to be executed from among various functions implemented by the cart terminal processing. The home screen shows a soft key for accepting an instruction to start the use by the user.

To start using the cart POS service at the store, the user gives an instruction to start the use by a predetermined operation such as tapping on the soft key shown in the home screen displayed on the touch panel 504 of the cart terminal 500 in an unused state.

In ACT 312, the processor 501 waits for a certain operation to be performed by the operator, in the state of displaying the home screen. If, for example, the touch panel 504 detects a certain operation by the operator, the processor 501 gives YES as the result of determination and proceeds to ACT 313.

In ACT 313, the processor 501 checks whether the performed operation is an operation for an instruction to start the use or not. If not, the processor 501 gives NO as the result of determination, checks the content of the operation, and proceeds to another process to perform the corresponding processing. As another process, for example, the processor 501 performs processing for maintenance in response to an operation by an authorized person such as a salesclerk. As another process, a different process or a plurality of processes may be selectively performed. However, such processes are not described in detail here.

If the operation for the instruction to start the use is performed as described above, the processor 501 gives YES as the result of determination in ACT 313 and proceeds to ACT 314.

In ACT 314, the processor 501 causes the touch panel 504 to display a member confirmation screen. The member confirmation screen is a screen for inquiring of the user about whether the user is a member or not. The member confirmation screen shows a soft key for the user to state that the user is a member, and a soft key for the user to state that the user is a non-member.

The user states that the user is a member, by a predetermined operation such as tapping on the soft key to state that the user is a member. Alternatively, the user states that the user is a non-member, by a predetermined operation such as tapping on the soft key to state that the user is a non-member.

In ACT 315, the processor 501 waits for a certain operation to be performed by the user. If it is confirmed that a certain operation is performed by the user, the processor 501 gives YES as the result of determination and proceeds to ACT 316.

In ACT 316, the processor 501 checks whether it is stated by the performed operation that the user is a member, or not. If not, the processor 501 gives NO as the result of determination and proceeds to ACT 317.

In ACT 317, the processor 501 checks whether it is stated by the performed operation that the user is a non-member, or not. If not, the processor 501 gives NO as the result of determination, checks the content of the operation, and proceeds to another process to perform the corresponding processing. As another process, for example, the processor 501 confirms that an operation of giving an instruction to cancel the start of the use is performed, and then returns to ACT 311. As another process, a different process or a plurality of processes may be selectively performed. However, such processes are not described in detail here.

If it is confirmed that the operation of stating that the user is a member is performed, the processor 501 gives YES as the result of determination in ACT 316 and proceeds to ACT 318.

In ACT 318, the processor 501 acquires the member code. For example, the processor 501 extracts the member code from barcode data represented by a barcode scanned by the scanner 505 on a member card held over the scanner 505 by the user. The processor 501 then attempts to acquire the user code about the user identified by the member code. The member code and the user code may be the same. In this case, the acquisition of the member code may be regarded as the acquisition of the user code. Alternatively, for example, if a user code is correlated with the acquired member code in a database or the like, the processor 501 acquires this user code.

After that, the processor 501 proceeds to ACT 319. If it is confirmed that the operation of stating that the user is a non-member is performed, the processor 501 gives YES as the result of determination in ACT 317, skips ACT 318, and proceeds to ACT 319.

In ACT 319, the processor 501 requests a check-in to the transaction processing device 100. For example, the processor 501 sends out request data for the request for the check-in, addressed to the transaction processing device 100, to the communication network 2 from the wireless communication unit 506. The processor 501 includes check-in data stored in the auxiliary memory unit 503 and the terminal code of the processor 501, in the request data. The terminal code is stored, for example, in the auxiliary memory unit 503. If the user code is successfully acquired in ACT 318, the processor 501 also includes this user code in the request data. As the check-in data, for example, the same check-in data as represented by the check-in code is written in the auxiliary memory unit 503 in advance. However, the check-in data written in the auxiliary memory unit 503 may partly differ from the check-in data represented by the check-in code. The terminal code is given in advance to each cart terminal 500 and written in the auxiliary memory unit 503 in such a way as to be able to identify each of a plurality of cart terminals 500 used in the same store and not to be the same as the terminal code of the user terminal 400. As the terminal code of the cart terminal 500, for example, a numerical value of " 1" to "999" is used.

When the request data is transmitted to the transaction processing device 100 via the communication network 2, the communication unit 104 of the transaction processing device 100 receives this request data and temporarily saves the request data in the main memory unit 102 or the auxiliary memory unit 103.

As the transaction processing device 100 thus receives the request data sent out from the cart terminal 500, the processor 101 starts transaction processing for the cart POS service (hereinafter referred to as cart POS processing) according to the transaction processing program PRA. The smartphone POS processing and the cart POS processing may be described by separate application programs from each other.

If the processor 101 has already executed the cart POS processing for a transaction with a different user, the processor 101 starts new cart POS processing as a different thread of processing from the former cart POS processing. Also, if the processor 101 has already executed the foregoing smartphone POS processing for a transaction with a different user, the processor 101 starts the cart POS processing as a different thread of processing from the smartphone POS processing. That is, the processor 101 may execute a plurality of sessions of smartphone POS processing and cart POS processing in parallel. However, the description below focuses on only the processing of a transaction with one user, as the processing of interest. Thus, the " cart terminal 500" in the description below refers to one cart terminal 500 used by the user for the cart POS processing of interest. The "transaction" in the description below refers to the transaction that is the target of the processing of interest.

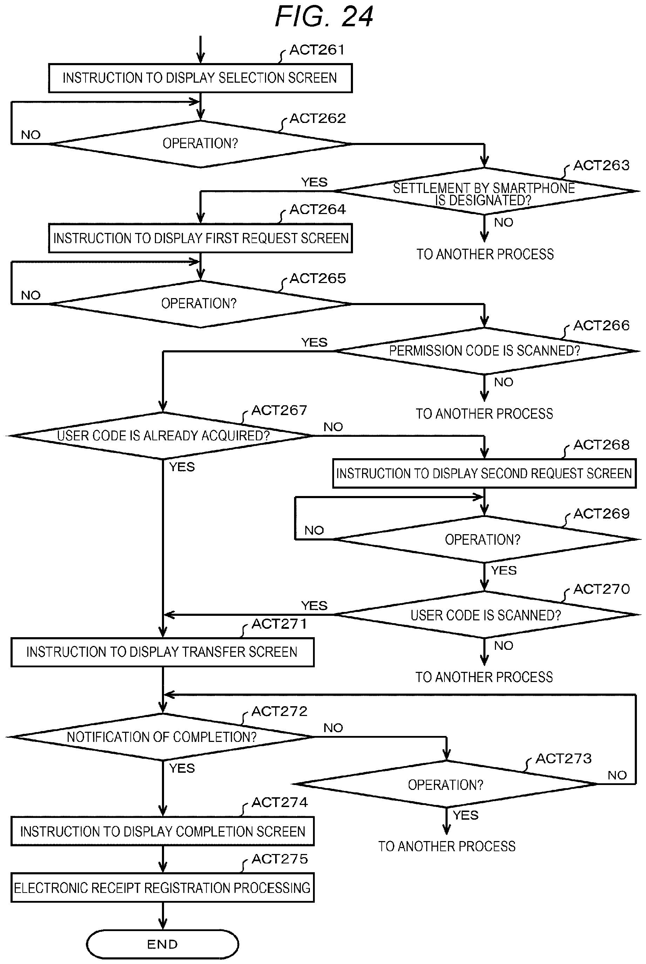

FIG. 24 is a flowchart of the cart POS processing.

In the cart POS processing, the processor 101 similarly performs each process shown in FIGS. 11 and 12 for the smartphone POS processing. However, the terminal used as the user interface in the cart POS processing is the cart terminal 500. The various screens displayed on the touch panel 504 of the cart terminal 500 may be changed suitably for the cart terminal 500. For example, if the cart terminal 500 is attached to the shopping cart with the touch panel 504 being horizontally long, the described vertically long various screens are changed to suit the shape of the touch panel 504. Also, for example, if the screen size of the touch panel 504 is greater than the screen size of the touch panel 404, a change can be made in such a way that more information than the foregoing various screens is shown on one screen. However, the described functions of the various screens are not substantially changed.

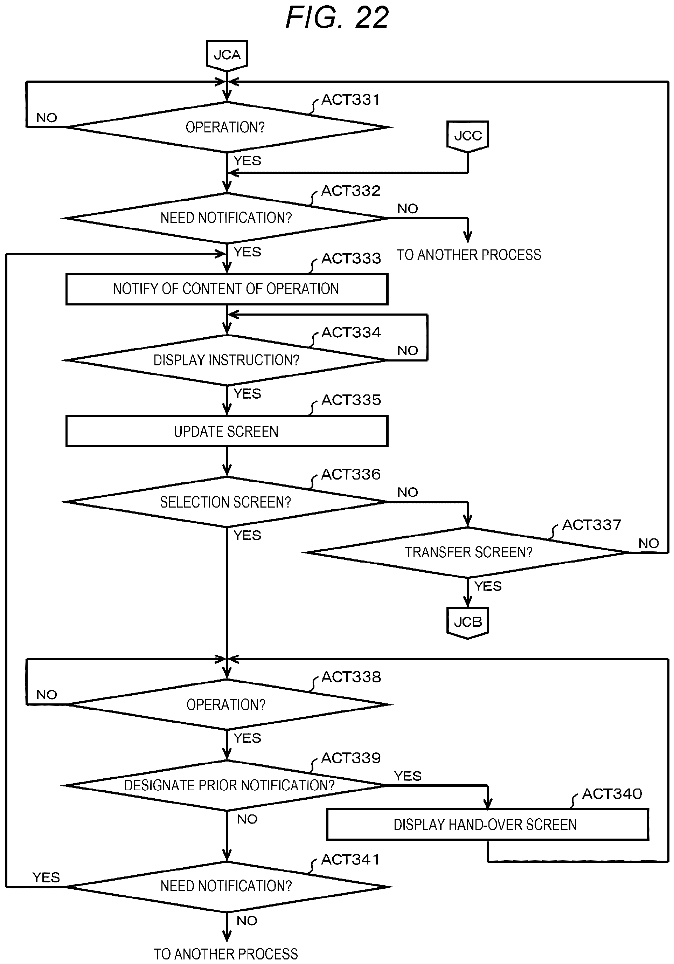

Thus, after requesting a check-in in ACT 319 in FIG. 21, the processor 501 executes ACT 320 to ACT 323 and ACT 331 to ACT 333 in FIG. 22 similarly to ACT 118 to ACT 121 in FIG. 8 and ACT 131 to ACT 133 in FIG. 9.

After notifying of the content of the operation in ACT 333, the processor 501 proceeds to ACT 334.

In ACT 334, the processor 501 waits for a display instruction. If the wireless communication unit 506 receives instruction data transmitted from the transaction processing device 100 to display a certain screen (Yes in ACT 334), the processor 501 proceeds to ACT 335.

In ACT 335, the processor 501 updates the display screen on the touch panel 504 in response to the instruction.

In ACT 336, the processor 501 checks whether the updated display screen is a selection screen. If the display screen is updated to a screen that is not a selection screen, the processor 501 proceeds to ACT 337.

In ACT 337, the processor 501 checks whether the updated display screen is a transfer screen. If the display screen is updated to a screen that is not the transfer screen, the processor 501 returns to ACT 331. That is, the processor 501 shifts to waiting for an operation about the updated screen.

The processor 101 of the transaction processing device 100 proceeds to ACT 261 in FIG. 24 in response to a notification from the cart terminal 500 that an operation for giving an instruction to start payment is performed.

In ACT 261, the processor 101 instructs the cart terminal 500 to display the selection screen. The selection screen is a screen for the user to designate settlement by smartphone or settlement by payment machine is to be performed and for the user to designate a pre-settlement notification, similarly to the first selection screen.

If the wireless communication unit 506 receives instruction data for the instruction to display the selection screen, the processor 501 of the cart terminal 500 gives YES as the result of determination in ACT 334 in FIG. 22, proceeds to ACT 335, and updates the display screen on the touch panel 504 into the selections screen. However, the processor 501 may cause the touch panel 504 to display the selection screen without receiving the display instruction from the processor 101. In this case, for example, the processor 101 skips ACT 261 and proceeds to ACT 262.

Since the updated screen at this point is the selection screen, the processor 501 gives YES as the result of determination in ACT 336 in FIG. 22 and proceeds to ACT 338.

In ACT 338, the processor 501 waits for a certain operation to be performed by the user. If, for example, the touch panel 504 detects a certain operation by the user, the processor 501 gives YES as the result of determination and proceeds to ACT 339.

In ACT 339, the processor 501 checks whether the performed operation is an operation for designating a pre-settlement notification or not. If the performed operation is the predetermined operation for designating the pre-settlement notification, the processor 501 gives YES as the result of determination and proceeds to ACT 340.

In ACT 340, the processor 501 causes the touch panel 504 to display a hand-over screen.

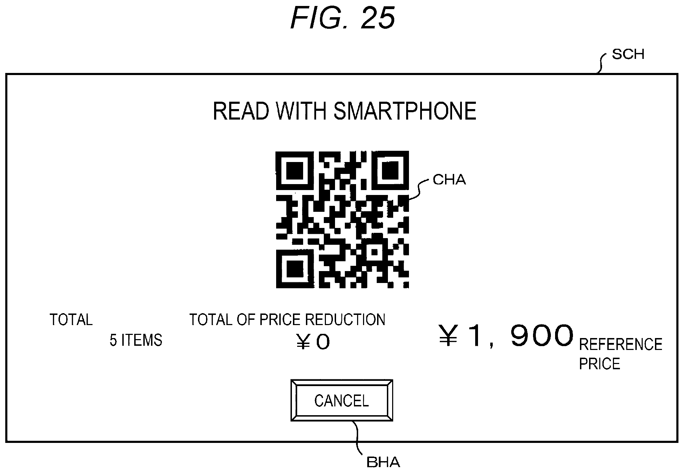

FIG. 25 shows a hand-over screen SCH.

The hand-over screen SCH shows the total amount of price reduction applied, the total number of items of traded merchandise, the amount of settlement, and the user code as text to allow the user to confirm the transaction which is to be the target of the pre-settlement notification. The hand-over screen SCH also shows a two-dimensional barcode CHA and a button BHA. The hand-over screen SCH also shows a text message for requesting the user (shopper) to cause the information communication terminal to be used for the pre-settlement notification to read the two-dimensional barcode CHA. The two-dimensional barcode CHA represents data for opening an email generation screen or the like when prior confirmation data for the transaction that is the target of the pre-settlement notification has already been input in the form of text data in an email text, via an application for email transmission (hereinafter referred to as a mailer). The content of the prior confirmation data may be similar to the prior confirmation data described above with respect to the user terminal 400 or may otherwise be suitably defined, for example, by the creator of the cart terminal program PRF. The acquisition of the prior confirmation data by the processor 501 may be performed similarly to the acquisition of the prior confirmation data by the processor 401. The processor 501 executes the cart terminal program PRF and functions as an acquisition unit.

If the user causes any information communication terminal that is different from the cart terminal 500 to read the two-dimensional barcode CHA, the mailer on this information communication terminal opens the email generation screen with a character string in place for prompting the user to confirm the transaction that is the target of the pre-settlement notification has already been input in an email text. The user operates the mailer to transmit the email to a desired notification destination. In this way, displaying the screen showing the two-dimensional barcode CHA is equivalent to handing over the prior confirmation data to the information communication terminal. The processor 501 executes the cart terminal program PRF and functions as a hand-over unit.

In response to the user giving an instruction to end the display of the hand-over screen, the processor 501 returns the display screen on the touch panel 504 to the selection screen displayed before the hand-over screen was displayed, and then returns to the waiting state of ACT 338 in FIG. 22.

To make settlement using the online settlement service, the user performs, for example, a predetermined operation for designating settlement by smartphone such as tapping on a button for designating settlement by smartphone shown in the selection screen. To make settlement using the payment machine 200, the user performs, for example, a predetermined operation for designating settlement by payment machine such as tapping on a button for designating settlement by payment machine shown in the selection screen. These operations are not the designation of the prior notification. Therefore, the processor 501 gives YES in ACT 338 and NO in ACT 339 in FIG. 22 as the result of determination and proceeds to ACT 341.

In ACT 341, the processor 501 checks whether the transaction processing device 100 needs to be notified of the performed operation or not. If the performed operation is not the operation predetermined as the target of notification, the processor 501 gives NO as the result of determination, checks the content of the operation, and proceeds to another process to perform the corresponding processing. As another process, for example, the processor 501 confirms that an operation of designating the cancellation of the pre-settlement notification is performed, returns the display screen on the touch panel 504 to the selection screen displayed before the hand-over screen was displayed, and then returns to the waiting state of ACT 338 in FIG. 22. As another process, a different process or a plurality of processes may be selectively performed. However, such processes are not described in detail here.

Since the operation of designating settlement by smartphone or settlement by payment machine as described above is a target of notification to the transaction processing device 100, the processor 501 gives YES as the result of determination in ACT 341, returns to ACT 333, and notifies the transaction processing device 100 that the operation concerned is performed. After that, the processor 501 shifts to the waiting state of ACT 334.

In ACT 262 in FIG. 24, the processor 101 waits for an operation to be performed at the cart terminal 500. If the transaction processing device 100 is notified of the operation as described above from the cart terminal 500, the processor 101 gives YES as the result of determination and proceeds to ACT 263.

In ACT 263, the processor 101 checks whether settlement by smartphone is designated or not. If not, the processor 101 gives NO as the result of determination, checks the content of the operation, and proceeds to another process to perform the corresponding processing. As another process in this context, the processor 101 confirms that settlement by payment machine was designated, and executes processing for causing the payment machine 200 to perform settlement processing of the price for the current transaction. As another process, a different process or a plurality of processes may be selectively performed. However, such processes are not described in detail here.

If the processor 101 of the transaction processing device 100 proceeds from ACT 262 to ACT 263 in response to the operation of designating settlement by smartphone at the cart terminal 500 as described above, the processor 101 gives YES as the result of determination in ACT 263 and proceeds to ACT 264.

In ACT 264, the processor 101 instructs the cart terminal 500 to display a first request screen. The first request screen is a screen for requesting the user to cause the cart terminal 500 to scan the permission code. If a notification identifier is included in instruction data for the instruction to display the first request screen, this notification identifier is assumed to identify, for example, a notification that an input of the permission code is requested.

If the operation of designating settlement by smartphone is performed on the selection screen, the processor 501 of the cart terminal 500 may cause the touch panel 504 to display the first request screen without receiving the display instruction from the transaction processing device 100. In this case, the processor 101 of the transaction processing device 100 does not execute ACT 264.

The user operates the cart terminal 500 in such a way that the scanner 505 reads the permission code put up in the payment area. If the scanner 505 reads a two-dimensional barcode, this operation is a target of notification and therefore the processor 501 gives YES as the result of determination in both ACT 331 and ACT 332 in FIG. 22, proceeds to ACT 333, and notifies the transaction processing device 100 that the scanning operation is performed, along with a notification of the barcode data represented by the two-dimensional barcode.

After finishing the display instruction in ACT 264 in FIG. 24, the processor 101 proceeds to ACT 265.

In ACT 265, the processor 101 waits for an operation to be performed at the cart terminal 500. If notified of the content of the operation from the cart terminal 500, the processor 101 gives YES as the result of determination and proceeds to ACT 266.

In ACT 266, the processor 101 checks whether the permission code is scanned or not. If not, the processor 101 gives NO as the result of determination, checks the content of the operation, and proceeds to another process to perform the corresponding processing. As another process in this context, the processor 101 may confirm that an operation of designating the cancellation of settlement by smartphone such as tapping on the button BGA was performed, then returns to ACT 261, and returns the display screen on the touch panel 504 of the cart terminal 500 to the selection screen. Also, as another process, the processor 101 may confirm that an operation of scanning a barcode that does not represent the permission code was performed, then shows an error indication, subsequently returns to ACT 264, and returns the display screen on the touch panel 504 of the cart terminal 500 to the first request screen. The error indication is, for example, a screen display for notifying the operator that settlement by smartphone cannot be performed unless the permission code is scanned. As another process, a different process or a plurality of processes may be selectively performed. However, such processes are not described in detail here.

If notified of an operation along with a notification of barcode data representing the permission code, the processor 101 gives YES as the result of determination in ACT 266 and proceeds to ACT 267.

In ACT 267, the processor 101 checks whether the user code is already acquired or not. If the user code is not inputted to the cart terminal 500 and the user code is not sent out along with check-in data from the cart terminal 500 and therefore the check-in data is not successfully acquired as part of the operation for starting the use of the cart terminal 500, the processor 101 gives NO as the result of determination and proceeds to ACT 268.

In ACT 268, the processor 101 instructs the cart terminal 500 to display a second request screen. The second request screen is a screen for requesting the user to cause the cart terminal 500 to scan the user code. If a notification identifier is included in instruction data for the instruction to display the second request screen, this notification identifier is assumed to identify, for example, a notification that an input of the user code is requested.

If the wireless communication unit 506 receives the instruction to display the second request screen, the processor 501 of the cart terminal 500 gives YES as the result of determination in ACT 334 in FIG. 22, proceeds to ACT 335, and updates the display screen on the touch panel 504 into the second request screen. Since the updated screen at this point is not the selection screen or the transfer screen, the processor 501 gives NO as the result of determination in both ACT 336 and ACT 337 and returns to the waiting state of ACT 331.

The user causes, for example, the screen of the information communication terminal such as the smartphone owned by this user to display a barcode representing the user code, and causes the scanner 505 of the cart terminal 500 to scan this barcode. If the scanner 505 reads the barcode, this operation is a target of notification and therefore the processor 501 gives YES as the result of determination in both ACT 331 and ACT 332 in FIG. 22, proceeds to ACT 333, and notifies the transaction processing device 100 that the scanning operation is performed, along with a notification of the barcode data represented by the barcode.

After finishing the display instruction in ACT 268 in FIG. 24, the processor 101 proceeds to ACT 269.

In ACT 269, the processor 101 waits for an operation to be performed at the cart terminal 500. If notified of the content of the operation from the cart terminal 500, the processor 101 gives YES as the result of determination and proceeds to ACT 270.

In ACT 270, the processor 101 checks whether the user code is scanned or not. If not, the processor 101 gives NO as the result of determination, checks the content of the operation, and proceeds to another process to perform the corresponding processing. As another process in this context, the processor 101 may confirm that an operation of designating the cancellation of settlement by smartphone such as tapping on the button BHA was performed, then return to ACT 261, and return the display screen on the touch panel 504 to the selection screen. Also, as another process, the processor 101 may confirm that an operation of scanning a barcode that does not represent the user code was performed, then show an error indication for notifying that the scanned barcode is wrong (invalid) in this context, subsequently return to ACT 268, and return the display screen on the touch panel 504 to the second request screen. As another process, a different process or a plurality of processes may be selectively performed. However, such processes are not described in detail here.

If notified of an operation along with a notification of barcode data representing the user code, the processor 101 assumes that the user code is scanned, therefore gives YES as the result of determination in ACT 270, and proceeds to ACT 271. If the processor 101 confirms that the user code is already acquired and therefore gives YES as the result of determination in ACT 267, the processor 101 proceeds to ACT 271 without performing ACT 268 to ACT 270.

In ACT 271, the processor 101 instructs the cart terminal 500 to display the transfer screen. The transfer screen is a screen for transferring the settlement using the online settlement service to another information communication terminal. Typically, a smartphone is used as this another information communication terminal. The transfer screen shows, for example, a two-dimensional barcode. This two-dimensional barcode represents transfer data including a settlement URL and also including a command requesting the execution of web access using this settlement URL.

If the wireless communication unit 506 receives instruction data for the instruction to display the transfer screen, the processor 501 of the cart terminal 500 gives YES as the result of determination in ACT 334 in FIG. 22, proceeds to ACT 335, and updates the display screen on the touch panel 504 into the transfer screen.

The user uses, for example, a barcode reader function of the information communication terminal such as the smartphone owned by this user, and thus causes the information communication terminal to read the two-dimensional barcode shown in the transfer screen. In response to this, the information communication terminal accesses the settlement server, based on the settlement URL included in the transfer data represented by the two-dimensional barcode, via the browser function. After that, the information communication terminal makes the settlement using the online settlement service in response to an instruction from the settlement service and an operation by the user, via the browser function. The procedures of the settlement using the online settlement service may be, for example, known procedures in an existing online settlement service. Such procedures are not described in detail here.

After giving the instruction to display the transfer screen in ACT 271 in FIG. 24, the processor 101 of the transaction processing device 100 proceeds to ACT 272.

In ACT 272, the processor 101 checks whether a notification of completion is given or not. If not, the processor 101 gives NO as the result of determination and proceeds to ACT 273.

In ACT 273, the processor 101 checks whether a certain operation is performed by the user or not. If not, the processor 101 gives NO as the result of determination and returns to ACT 272.

Thus, the processor 101 gives a notification of completion or waits for an operation in ACT 272 or ACT 273.

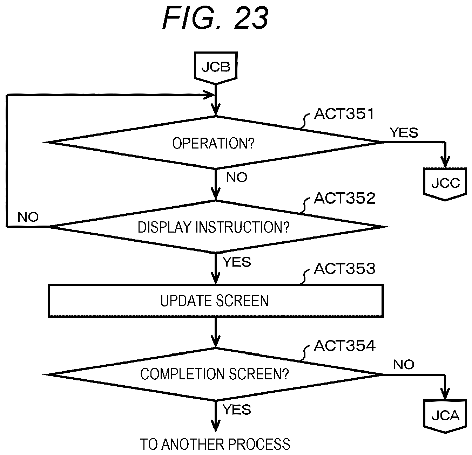

If the processor 501 of the cart terminal 500 causes the transfer screen to be displayed in ACT 335 in FIG. 22, the processor 501 gives NO in ACT 336 and YES in ACT 337 as the result of determination and proceeds to ACT 351 in FIG. 23.

In ACT 351, the processor 501 checks whether a certain operation has been performed by the user or not. If not, the processor 501 gives NO as the result of determination and proceeds to ACT 352.

In ACT 352, the processor 501 checks whether a display instruction is given or not. If not, the processor 501 gives NO as the result of determination and returns to ACT 351.

Thus, the processor 501 waits for an operation or a display instruction in ACT 351 or ACT 352.

If, for example, the user performs an operation such as tapping on a button shown in the transfer screen is performed by the user and the touch panel 504 detects this operation, the processor 501 gives YES as the result of determination in ACT 351, shifts to ACT 332 in FIG. 22, and repeats the subsequent processing similarly to the above. For example, if a predetermined operation for giving an instruction to cancel settlement by smartphone such as tapping on a button shown in the transfer screen for accepting an instruction to cancel settlement by smartphone is performed, this operation is a target of notification and therefore the processor 501 gives YES as the result of determination in both ACT 331 and ACT 332, proceeds to ACT 333, and notifies the transaction processing device 100 of this operation.

If notified of an operation from the cart terminal 500 in this way, the processor 101 of the transaction processing device 100 gives YES as the result of determination in ACT 273 in FIG. 24 and proceeds to another process to perform the processing corresponding to the content of the operation which the processor 101 is notified of. As another process in this context, the processor 101 may confirm that an operation of designating the cancellation of settlement by smartphone was performed, then return to ACT 261, and return the display screen on the touch panel 504 to the selection screen. As another process, a different process or a plurality of processes may be selectively performed. However, such processes are not described in detail here.

On completion of the settlement processing started in response to the access based on the settlement URL, the settlement server notifies the transaction processing device 100 of the completion of the settlement along with a notification of the transaction code determined from the settlement URL.

If notified of the completion in this way, the processor 101 gives YES as the result of determination in ACT 272 in FIG. 24 in the cart POS processing currently executed for the transaction identified by the transaction code given in the notification, and then proceeds to ACT 274.

In ACT 274, the processor 101 instructs the cart terminal 500 to display the completion screen. The completion screen is a screen for causing the user to recognize that the transaction is complete. If a notification identifier is included in instruction data for the instruction to display the completion screen, this notification identifier is assumed to identify, for example, a notification that the settlement is complete.

In ACT 275, the processor 101 performs the electronic receipt registration processing similarly to ACT 252 in FIG. 13.

After that, the processor 101 ends the cart POS processing.

On receiving the display instruction while the touch panel 504 is displaying the transfer screen, the processor 501 gives YES as the result of determination in ACT 352 in FIG. 23 and proceeds to ACT 353.

In ACT 353, the processor 501 updates the display screen on the touch panel 504 in response to the instruction based on the instruction data. If instructed to display the completion screen as described above, the processor 501 updates the screen on the touch panel 504 into the completion screen.

In ACT 354, the processor 501 checks whether the updated display screen is the completion screen or not. If the display screen is updated to the completion screen as described above, the processor 501 gives YES as the result of determination and proceeds to another process. As another process in this context, the processor 501 may return to ACT 311 in FIG. 21 in response to the execution of an operation such as tapping on a soft key shown in the completion screen. As another process, a different process or a plurality of processes may be selectively performed. However, such processes are not described in detail here.

In some cases, an instruction to display a screen that is not the completion screen may be given while the touch panel 504 is displaying the transfer screen, as in the case where an instruction to cancel settlement by smartphone is given or the like. In such cases, the processor 501 gives NO as the result of determination in ACT 354 and shifts to the waiting state of ACT 331 in FIG. 22.

The processor 501 executes the cart terminal program PRF and functions as an execution unit executing various functions for causing the cart terminal 500 to operate as a user interface terminal.

As described above, if instructed to give a prior notification by the user, the user terminal 400 hands over prior confirmation data to an application such as an SNS or a mailer of this user terminal 400. Thus, the user can notify a third party of the content of the transaction to be settled by using the application such as the SNS or the mailer. Therefore, the client (user of the personal shopping service) can easily check the content of the selected/registered items picked by the personal shopper or the like before the settlement.

When instructed to give a prior notification, the cart terminal 500 displays a two-dimensional barcode to hand over the prior confirmation data to an application such as a mailer of another information communication terminal. Thus, the user (shopper) can cause an information communication terminal to read the two-dimensional barcode and thus can notify the third party (client) of the content of a transaction still to be settled, using the application such as the mailer of this information communication terminal. Therefore, the user (client) can easily check the content of the shopping before the settlement. Since the user (shopper) need not input information such as the destination of transmission for the prior confirmation data to the cart terminal 500, the cart terminal 500 does not require significantly complicated efforts by the user (shopper).

This embodiment can be implemented with various modifications such as those described below.

The processor 401 and the processor 501 may hand over the prior confirmation data at any time during the registration of traded merchandise.

The application in the information communication terminal to which the cart terminal 500 hands over the prior confirmation information may be application other than the mailer, such as an SNS application.

A part or all of the processing performed by the processor 101 of the transaction processing device 100 may be executed by the processor 401, 501 of the user terminal 400 or the cart terminal 500. For example, the transaction data may be saved in the auxiliary memory unit 403, 503 and may be updated by the processor 401, 501.

A part or all of the functions implemented by the processors 101, 301, 401, 501 via information processing can instead be implemented by dedicated hardware or the like such as a logic circuit. Each of the variously described functions can also be implemented as a combination of the hardware (such as a logic circuit) and software.

While some embodiments have been described, these embodiments are presented simply as examples and are not intended to limit the scope of the present disclosure. These novel embodiments can be carried out in various other forms and can include various omissions, replacements, and modifications without departing from the gist and scope of the present disclosure. These embodiments and the modifications thereof are included in the gist and scope of the present disclosure and also included in the scope of the claims and equivalents thereof.

## Claims

1. A method for personal shopping services, the method comprising:
executing a shopping application on a communication terminal to generate transaction data for a sales transaction for a personal shopping service, the transaction data including commodity information of at least one commodity;
acquiring prior confirmation request data for the personal shopping service from the transaction data; and
handing over the acquired prior confirmation request data to another application on the communication terminal and causing the other application to transmit the acquired prior request confirmation data to another communication terminal.

2. The method according to claim 1, further comprising:
displaying a screen with the shopping application permitting the other application to which the acquired prior confirmation request data is handed over to be selected by a user.

3. The method according to claim 1 or 2, wherein the other application is an email program.

4. The method according to any one of claims 1 to 3, wherein the other application is a social networking service application.

5. The method according to any one of claims 1 to 4, wherein transaction data includes a commodity list, prices for commodities on the commodity list, and a transaction total due.

6. The method according to any one of claims 1 to 5, wherein the communication terminal is a cart-based point-of-sale terminal mounted to a shopping cart.

7. The method according to any one of claims 1 to 5, wherein the communication terminal is a smartphone.

8. The method according to any one of claims 1 to 5, wherein the shopping application is a smartphone point-of-sale application.

9. A communication device for a personal shopping service, the device comprising:
a storage unit storing a personal shopping service application and a second application for transmitting information to a client of a personal shopping service;
a processor configured to:
execute the personal shopping service application to generate transaction data for a sales transaction for the personal shopping service, the transaction data including commodity information of at least one commodity;
acquire prior confirmation request data for the personal shopping service from the transaction data; and
hand over the acquired prior confirmation request data to the second application and cause the second application to transmit the acquired prior request confirmation data to the client.

10. The communication device according to claim 9, further comprising:
a display screen, wherein
the processor is further configured to:
display a screen with the personal shopping service application permitting the second application to be selected by a user.

11. The communication device according to claim 9 or 10, wherein the second application is an email program.

12. The communication device according to any one of claims 9 to 11, wherein the second application is a social networking service application.

13. The communication device according to any one of claims 9 to 12, wherein transaction data includes a commodity list, prices for commodities on the commodity list, and a transaction total due.

14. The communication device according to any one of claims 9 to 13, wherein the communication device is mounted to a shopping cart.

15. A non-transitory, computer-readable medium storing program instructions which when executed a processor of a communication device causes the device to perform a method according to any one of claims 1 to 8.
